# EUROPEAN PATENT APPLICATION

(11) **EP 4 564 830 A1**
(43) Date of publication of application: **04.06.2025**
(21) Application number: 23859059.0
(22) Date of filing: 02.08.2023
(51) Int. Cl.: H04N 21/4363

(54) **SCREENCASTING METHOD AND DEVICE**

(30) Priority: 29.08.2022 CN 202211042423
(71) Applicant: Huawei Technologies Co., Ltd., Shenzhen, Guangdong 518129 (CN)
(72) Inventor: CHENG, Xiaobo, Shenzhen, Guangdong 518129 (CN); HU, Shiyao, Shenzhen, Guangdong 518129 (CN); ZHANG, Yingying, Shenzhen, Guangdong 518129 (CN)
(74) Representative: Isarpatent
(86) International application number: PCT/CN2023/110846
(87) International publication number: WO 2024/046024

(57) **Abstract**

This application provides a projection method and a device, and relates to the field of terminal technologies, to improve transmission efficiency of a projected image. The method includes: A first terminal receives a first image sent after a second terminal starts projection, where the first image is an image displayed on the second terminal; the first terminal obtains a screen resolution of the second terminal; and the first terminal displays a second image based on the first image and the screen resolution of the second terminal, where the second image is a projected image of the first image.

## Description

This application claims priority to Chinese Patent Application No. 202211042423.0, filed with the China National Intellectual Property Administration on August 29, 2022 and entitled "PROJECTION METHOD AND DEVICE", which is incorporated herein by reference in its entirety.

### TECHNICAL FIELD

This application relates to the field of terminal technologies, and in particular, to a projection method and a device.

### BACKGROUND

With development of device collaboration technologies, all-scenario devices are widely used. For example, in a home scenario, a terminal used to play a video may include but is not limited to a television set, a computer, a mobile phone, a tablet computer, and the like. A small-screen terminal (referred to as a projection source end below) like a mobile phone may project a video image onto a large-screen terminal (referred to as a projection destination end below) like a television set for display, to improve viewing experience of a user.

In an existing projection solution, the projection source end first adds a black border to a projected image, and sends the projected image to the projection destination end, and the projection destination end processes and displays the received projected image. In this process, transmission efficiency of the projected image is low.

### SUMMARY

This application provides a projection method and a device, to improve transmission efficiency of a projected image.

To achieve the foregoing objective, this application uses the following technical solutions.

According to a first aspect, this application provides a projection method. The method includes: A first terminal receives a first image sent after a second terminal starts projection, where the first image is an image displayed on the second terminal; the first terminal obtains a screen resolution of the second terminal; and the first terminal displays a second image based on the first image and the screen resolution of the second terminal, where the second image is a projected image of the first image.

Based on the foregoing technical solution, after the second terminal starts projection, the first terminal may receive the first image displayed on the second terminal, may further obtain the screen resolution of the second terminal, and can display the second image based on the first image and the screen resolution of the second terminal. In this way, because the second terminal does not add a black border to the first image, a data amount of an image transmitted between the first terminal and the second terminal is less than a data amount of an image to which the black border is added. Therefore, transmission efficiency of the image can be improved. The image is to be projected by the second terminal to the first terminal. Therefore, transmission efficiency of the projected image can be improved.

In a possible design, a ratio of a resolution of the first image is different from a ratio of a screen resolution of the first terminal; and that the first terminal displays a second image based on the first image and the screen resolution of the second terminal includes: The first terminal determines the resolution of the first image based on the screen resolution of the second terminal (or referred to as determining the ratio of the resolution of the first image based on a ratio of the screen resolution of the second terminal); the first terminal adjusts the ratio of the resolution of the first image (or referred to as adjusting the resolution of the first image), where a ratio of a resolution of the first image obtained after adjustment is the same as the ratio of the screen resolution of the first terminal; and the first terminal displays the second image based on the first image obtained after adjustment.

Based on this design, when the ratio of the resolution of the first image is different from the ratio of the screen resolution of the first terminal, the first terminal may first determine the resolution of the first image based on the obtained screen resolution of the second terminal. For example, the screen resolution of the second terminal may be the same as the resolution of the first image. In this way, the first terminal may adjust the ratio of the resolution of the first image, so that the ratio of the resolution of the first image is the same as the ratio of the screen resolution of the first terminal, and the first image can occupy more display areas on the first terminal. In this way, the projected image is clearer, and a projection effect is better.

In a possible design, that the first terminal adjusts the ratio of the resolution of the first image includes: The first terminal fills the first image with a black border, where a ratio of a resolution of a first image that is filled with the black border is the same as the ratio of the screen resolution of the first terminal. Based on this design, the first terminal may adjust the ratio of the resolution of the first image by adding a black border to the first image. In this way, the ratio of the resolution of the first image can be adjusted without affecting a display ratio of content in the first image.

In a possible design, before that the first terminal displays a second image based on the first image and the screen resolution of the second terminal, the method further includes: The first terminal performs black border detection on the first image based on the resolution of the first image.

Based on this design, the first terminal may determine which areas in the first image are effective areas, namely, areas in which data is displayed, and which areas are black border areas, namely, areas in which data may not be displayed. In addition, when the first terminal performs black border detection, because the second terminal does not add the black border to the first image, a quantity of pixels in the first image is much less than a quantity of pixels in the first image to which the black border is added. Therefore, the quantity of pixels to be detected by the first terminal is smaller. In this way, black border detection efficiency can be improved. In addition, for a high-spec first terminal, for example, a 4K television set, because black border detection efficiency is improved, a time requirement of the first terminal on black border detection can be met. For a low-configuration first terminal, even if a computing capability of the first terminal is limited, because black border detection efficiency is improved, a requirement of performing black border detection in real time can be met.

In a possible design, a result of the black border detection is that the first image includes a black border; and the method further includes: When the black border included in the first image is used to display data, the first terminal does not crop the black border that is included in the first image and that is used to display the data.

Based on this design, if the black border in the first image is used to display data, for example, in a caption or bullet comment scenario, the first terminal does not crop the black borders used to display the data. This can avoid problems of image jitter and jump caused by different black borders included in different frames of projected images. However, the first terminal may crop a black border other than the black border. In this way, when the problems of image jitter and jump caused by different black borders included in different frames of projected images are resolved, the effective area (or referred to as the area in which the data is displayed) in the first image can occupy more display areas on the first terminal, so that the projected image is clearer.

In a possible design, a result of the black border detection is that the first image includes a black border; and the method further includes: When the black border included in the first image is not used to display data, the first terminal crops the black border that is included in the bordered first image, where a ratio of a resolution of the cropped first image is the same as the ratio of the screen resolution of the first terminal. Based on this design, if the black border included in the first image is not used to display data, the first terminal may crop the black border, so that the effective area (or referred to as the area in which the data is displayed) in the first image can occupy more display areas on the first terminal, and then the projected image is clearer.

In addition, the first terminal may crop the black border that is included in the bordered first image. In other words, the first terminal may first perform the black border adding operation, and then perform a black border cropping operation. Resolutions of projected images transmitted by the same second terminal to the first terminal are the same, and may all be screen resolution of the second terminal. In addition, the screen resolution of the first terminal is also fixed. In this way, when the first terminal adds black borders to the projected images transmitted by the same second terminal, because these projected images are not cropped, and the resolutions of these projected images are the same, the first terminal may determine that sizes of the black borders to be added to these projected images are also the same. The first terminal does not need to separately calculate, based on the resolution of each projected image, a size of a black border that needs to be added, so that power consumption generated when the first terminal adds the black border to the projected image can be reduced, that is, power consumption generated when the first terminal adjusts a ratio of the resolution of each projected image to adapt to the ratio of the screen resolution of the first terminal can be reduced.

In a possible design, the data includes a caption and/or a bullet comment.

In a possible design, the first terminal displays the second image in split screen, and that the first terminal displays a second image based on the first image and the screen resolution of the second terminal includes: The first terminal determines a resolution of the first image based on the screen resolution of the second terminal; the first terminal performs black border detection on the first image based on the resolution of the first image; and the first terminal determines, based on a result of the black border detection, that the first image includes a black border, the first terminal crops the black border included in the first image, and the first terminal displays the second image based on a first image obtained after cropping.

Based on this design, when the first terminal displays the projected image in split screen, if the first terminal determines that the projected image includes a black border after the first terminal performs black border detection on the projected image, the first terminal may directly crop the black border in the projected image. However, because the projected image received by the first terminal is an interface originally displayed by the second terminal, and the second terminal does not perform the black border adding operation on the projected image, when the first terminal crops the black border, the first terminal needs to crop only the original black border of the projected image. This can avoid a redundant operation in which the second terminal adds a black border to the projected image and the first terminal crops the added black border in a projection scenario in which the first terminal uses split-screen display.

In a possible design, the first terminal displays the second image in split screen, and that the first terminal displays a second image based on the first image and the screen resolution of the second terminal includes: The first terminal determines a resolution of the first image based on the screen resolution of the second terminal; the first terminal performs black border detection on the first image based on the resolution of the first image; and the first terminal determines, based on a result of the black border detection, that the first image does not include a black border, and the first terminal displays the second image based on the first image. Based on this design, when the first terminal displays a projected image in split screen, if the first terminal determines that the projected image does not include the black border after the first terminal performs black border detection on the projected image, the first terminal may directly display a corresponding interface based on the projected image.

In a possible design, the method further includes: The first terminal further displays a third image, where the third image and the second image are displayed in split screen; and the third image is a projected image of an image displayed on a third terminal; or the third image is an image originally output on the first terminal; or the third image is a projected image of an image displayed on the second terminal.

According to a second aspect, this application provides a projection method, where the method includes: A second terminal displays a first image; and after the second terminal starts projection, the second terminal sends the first image and a screen resolution of the second terminal to a first terminal, where the first image and the screen resolution of the second terminal are used by the first terminal to display a second image, and the second image is a projected image of the first image.

According to a third aspect, this application provides a projection device. The projection device has a function of implementing the method according to the first aspect or the second aspect and any design of the first aspect or the second aspect. The function may be implemented by hardware, or may be implemented by hardware executing corresponding software. The hardware or the software includes one or more modules corresponding to the function.

According to a fourth aspect, this application provides a projection device, including a processor, a memory, a communication interface, and a display, where the memory, the display, and the communication interface are coupled to the processor, the communication interface is configured to communicate with another device, the memory is configured to store computer program code, the computer program code includes computer instructions, and the processor reads the computer instructions from the memory, so that the projection device performs the method according to the first aspect or the second aspect and any design of the first aspect or the second aspect.

Optionally, the memory may be coupled to the processor, or may be independent of the processor. For example, the communication interface may be a transceiver, an input/output interface, an interface circuit, an output circuit, an input circuit, a pin, a related circuit, or the like.

According to a fifth aspect, this application provides a computer-readable storage medium. The computer-readable storage medium includes a computer program or instructions, and when the computer program or the instructions is/are run on a projection device, the projection device is enabled to perform the method according to the first aspect or the second aspect and any design of the first aspect or the second aspect.

According to a sixth aspect, this application provides a computer program product. When the computer program product is run on a computer, the computer is enabled to perform the method according to the first aspect or the second aspect and any design of the first aspect or the second aspect.

According to a seventh aspect, this application provides a chip system, including at least one processor and at least one interface circuit. The at least one interface circuit is configured to perform a transceiver function, and send instructions to the at least one processor. When the at least one processor executes the instructions, the at least one processor performs the method according to the first aspect or the second aspect and any design of the first aspect or the second aspect.

According to an eighth aspect, this application provides a projection system, including a first terminal and a second terminal, where the first terminal is configured to perform the method according to the first aspect and any design of the first aspect, and the second terminal is configured to perform the method according to the second aspect and any design of the second aspect.

It should be noted that, for technical effects brought by any design of the second aspect to the eighth aspect, refer to technical effects brought by a corresponding design of the first aspect. Details are not described herein again.

### BRIEF DESCRIPTION OF DRAWINGS

FIG. 1 is a schematic flowchart of an existing projection method;
FIG. 2 is a diagram 1 of an interface according to an embodiment of this application;
FIG. 3 is a diagram 2 of an interface according to an embodiment of this application;
FIG. 4 is a diagram 3 of an interface according to an embodiment of this application;
FIG. 5 is a diagram of an architecture of a communication system according to an embodiment of this application;
FIG. 6 is a diagram of a structure of a terminal according to an embodiment of this application;
FIG. 7a is a diagram of another structure of a terminal according to an embodiment of this application;
FIG. 7b is a block diagram of a software structure of a terminal according to an embodiment of this application;
FIG. 8 is a diagram 4 of an interface according to an embodiment of this application;
FIG. 9 is a diagram 5 of an interface according to an embodiment of this application;
FIG. 10 is a diagram 6 of an interface according to an embodiment of this application;
FIG. 11 is a diagram 7 of an interface according to an embodiment of this application;
FIG. 12 is a schematic flowchart of a projection method according to an embodiment of this application;
FIG. 13 is a diagram 8 of an interface according to an embodiment of this application;
FIG. 14 is a diagram 9 of an interface according to an embodiment of this application;
FIG. 15 is a diagram of pixels in a projected image according to an embodiment of this application;
FIG. 16 is a diagram 10 of an interface according to an embodiment of this application;
FIG. 17 is a diagram 11 of an interface according to an embodiment of this application;
FIG. 18 is a diagram 12 of an interface according to an embodiment of this application;
FIG. 19 is a diagram 13 of an interface according to an embodiment of this application;
FIG. 20 is a diagram 14 of an interface according to an embodiment of this application;
FIG. 21 is a diagram of a structure of a projection device according to an embodiment of this application; and
FIG. 22 is a diagram of a structure of a chip system according to an embodiment of this application.

### DESCRIPTION OF EMBODIMENTS

The following describes in detail a projection method and a device provided in embodiments of this application with reference to the accompanying drawings.

Terms "including" and "having", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word "example", "for example", or the like is intended to present a related concept in a specific manner.

In the descriptions of this application, unless otherwise specified, "a plurality of" means two or more than two. A term "and/or" in this specification describes only an association relationship between associated objects and indicates that there may be three relationships. For example, A and/or B may represent the following three cases: Only A exists, both A and B exist, and only B exists.

Currently, to improve user experience, a plurality of terminals may be connected and used together. For example, after a connection is established between two terminals, multi-screen collaboration may be used to implement cooperation between the two terminals. Multi-screen collaboration can use a screen mirroring manner to project an interface displayed on one terminal onto a display of another terminal for display. For example, in embodiments of this application, a terminal that projects a display interface of the terminal may be referred to as a projection source end, and a terminal that receives projection of the projection source end and displays the display interface of the projection source end may be referred to as a projection destination end. An interface that is projected by the projection source end and that is displayed on the projection destination end is referred to as a projected image (or referred to as a projection interface).

Generally, a screen resolution of the projection source end is different from that of the projection destination end. Therefore, in a current projection solution, the projection source end adds a black border to the projected image based on the screen resolution of the projection destination end, to send, to the projection destination end, a projected image that matches the screen resolution of the projection destination end.

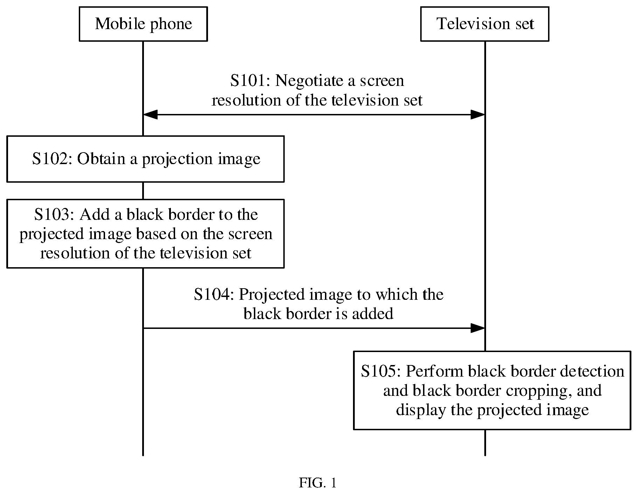

For example, the projection source end is a mobile phone, and the projection destination end is a television set. FIG. 1 is a schematic flowchart of an existing projection method. As shown in FIG. 1, the projection method includes the following steps.

S101: The mobile phone and the television set negotiate a screen resolution of the television set.

The mobile phone may obtain the screen resolution of the television set in this step.

S102: The mobile phone obtains a projected image.

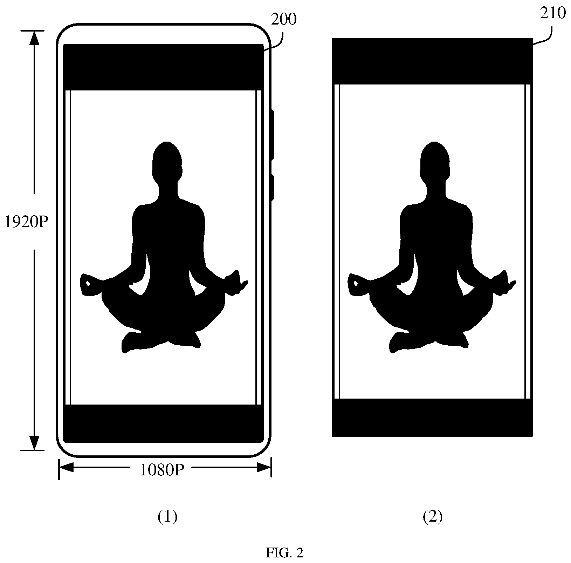

The mobile phone may obtain a currently displayed interface as the projected image. For example, the mobile phone displays an image interface 200 shown in (1) in FIG. 2. The projected image obtained by the mobile phone may be a projected image 210 shown in (2) in FIG. 2.

S103: The mobile phone adds a black border to the projected image based on the screen resolution of the television set.

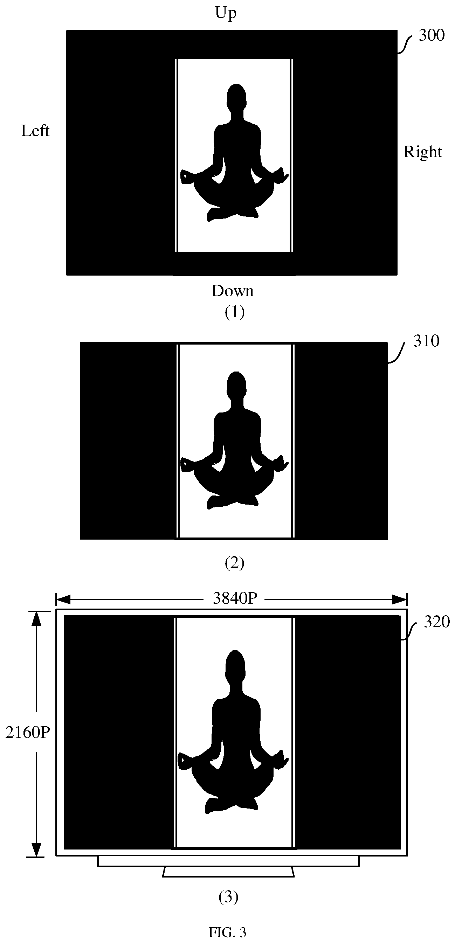

For example, a screen resolution of the mobile phone shown in (1) in FIG. 2 is 1920x1080 pixels (pix, P), that is, a length (or referred to as a height) of the mobile phone is 1920P and a width is 1080P; and a screen resolution of the television set shown in (3) in FIG. 3 is 2160x3840P, that is, a height of the television set is 2160P and a width is 3840P.

Because the screen resolution of the mobile phone shown in (1) in FIG. 2 is 1920x1080P, and the screen resolution of the mobile phone is the same as a resolution of the projected image obtained by the mobile phone, a resolution of the projected image 210 shown in (2) in FIG. 2 is also 1920x1080P. The mobile phone may add black borders to, for example, left and right sides of the projected image 210 shown in (2) in FIG. 2 based on the screen resolution of the television set (the screen resolution of the television set shown in (3) in FIG. 3). For example, a projected image to which black borders are added may be shown as a projected image 300 shown in (1) in FIG. 3. A ratio of a resolution of the projected image 300 shown in (1) in FIG. 3 is the same as a ratio of the screen resolution of the television set shown in (3) in FIG. 3, and a height-width ratio is 2160:3840. It may be understood that a ratio of a resolution in embodiments of this application is a height-width ratio.

Optionally, for descriptions of the orientation described below, refer to descriptions of the orientation shown in (1) in FIG. 3. Details are not shown below again.

S104: The mobile phone sends, to the television set, the projected image to which the black border is added. Correspondingly, the television set receives, from the mobile phone, the projected image to which the black border is added.

S105: The television set performs black border detection and black border cropping, and displays a projected image.

For example, the mobile phone may perform black border detection on the projected image 300 shown in (1) in FIG. 3, that is, determine which areas of the projected image 300 are black borders. Then, when determining that black borders exist on at least three parts of the projected image 300 shown in (1) in FIG. 3, the television set may perform black border cropping on the projected image 300 shown in (1) in FIG. 3. For example, the television set may perform black border cropping on upper and lower black borders of the projected image 300 shown in (1) in FIG. 3, and then correspondingly, the television set also performs appropriate cropping on left and right black borders of the projected image 300, so that a ratio of a resolution of the projected image obtained after cropping is the same as the ratio of the screen resolution of the television set. For example, the projected image obtained after cropping may be shown as the projected image 310 shown in (2) in FIG. 3. Finally, the television set may display the projected image obtained after the black borders are cropped. For example, the television set may display the projected image 320 shown in (3) in FIG. 3.

In the foregoing projection solution, the mobile phone (namely, the projection source end) adds the black border to the projected image and then transmits, to the television set (the projection destination end), the projected image to which the black border is added. In this case, because a data amount of the transmitted projected image increases, transmission efficiency of the projected image is reduced. In addition, as the screen resolution of the projection destination end becomes higher, the projection source end needs to add more black borders. In this case, because a data amount of a transmitted projected image becomes larger, transmission efficiency of the projected image becomes lower.

In addition, after the projection destination end receives the projected image to which the black border is added from the projection source end, and if black border detection is performed on the projected image, because black borders in the projected image increase, pixels of the projected image also increase. In this case, when the projection destination end performs black border detection, more pixels need to be detected, which also reduces efficiency of black border detection performed by the projection destination end. In addition, a quantity of pixels of black borders added by the projection source end may even be greater than a quantity of pixels of the original projected image obtained by the projection source end. In this case, power consumption of black border detection performed by the projection destination end is greatly increased, and black border detection efficiency is lower. In addition, for a high-spec projection destination end, for example, a 4K television set, there is a requirement on time consumed for performing black border detection by the projection destination end, and this solution cannot meet the requirement. For a low-configuration projection destination end, because a computing capability of the projection destination end is limited, and if this solution is used for black border detection, a requirement of performing black border detection in real time cannot be met.

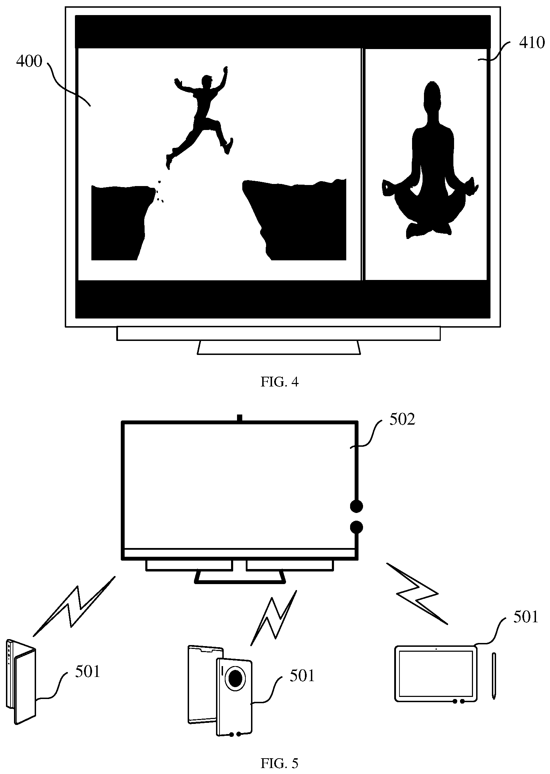

In addition, in a scenario in which the projection destination end displays the projected image in split screen, as shown in FIG. 4, the projection destination end simultaneously displays one or more projected images (only one projected image, for example, a projected image 410, is shown in FIG. 4) transmitted by the projection source end and one or more interfaces (only one projected image, for example, a video interface 400, is shown in FIG. 4) of the projection destination end, or simultaneously displays a plurality of projected images (not shown in the figure) transmitted by different projection source ends. In the foregoing projection solution, the projection source end also adds a black border to the projected image (for example, the projected image 410) according to the method described in step S103. However, in a process of performing black border detection and black border cropping, the projection destination end re-crops the black border added by the projection source end.

For example, the projected image 410 is obtained by using the projected image 210 shown in (2) in FIG. 2. A projected image obtained after the mobile phone adds left and right black borders to the projected image 210 shown in (2) in FIG. 2 is the projected image 300 shown in (1) in FIG. 3. After receiving the projected image 300, the television set crops the upper and lower black borders and the left and right black borders of the projected image 300, that is, the black borders added by the mobile phone to the projected image is cropped again. Therefore, redundant processing exists in this solution.

In view of this, embodiments of this application provide a projection method. The method may be applied to a scenario in which a projection source end projects a projected image onto a projection destination end for display when a plurality of terminals are used cooperatively. According to the projection method, transmission efficiency of projection data can be improved, efficiency of performing black border detection by the projection destination end can be improved, and redundant operation processing in a scenario in which the projection destination end uses split-screen display can be avoided.

For example, the projection method provided in embodiments of this application may be applied to various projection scenarios such as a full-screen display scenario, a split-screen display scenario, a multi-channel projection scenario, and a caption and/or bullet comment projection scenario.

For example, FIG. 5 is a diagram of a system architecture to which a projection method provided in an embodiment of this application is applied according to an embodiment of this application. As shown in FIG. 5, the system includes at least one first terminal 501 (only three first terminals are shown in FIG. 5) and a second terminal 502.

The first terminal 501 may establish a connection to the second terminal 502 by using a wired communication technology and/or a wireless communication technology. Based on the established connection, the first terminal 501 and the second terminal 502 may be cooperatively used together. The wireless communication technology includes but is not limited to at least one of the following: near field communication (near field communication, NFC), Bluetooth (Bluetooth, BT) (for example, conventional Bluetooth or Bluetooth low energy (Bluetooth low energy, BLE)), a wireless local area network (wireless local area network, WLAN) (for example, a wireless fidelity (wireless fidelity, Wi-Fi) network), ZigBee (ZigBee), frequency modulation (frequency modulation, FM), infrared (infrared, IR), and the like.

In some embodiments, both the first terminal 501 and the second terminal 502 support a proximity discovery function. For example, after the first terminal 501 approaches the second terminal 502, the first terminal 501 and the second terminal 502 can discover each other, and then establish a wireless communication connection like a Wi-Fi peer-to-peer (peer-to-peer, P2P) connection or a Bluetooth connection. After the wireless communication connection is established, the first terminal 501 and the second terminal 502 may implement signal interaction through the wireless communication connection.

In some embodiments, the first terminal 501 establishes a wireless communication connection to the second terminal 502 through a local area network. For example, both the first terminal 501 and the second terminal 502 are connected to a same router.

In some embodiments, the first terminal 501 establishes a wireless communication connection to the second terminal 502 through a cellular network, the Internet, or the like. For example, the second terminal 502 accesses the Internet through a router, and the first terminal 501 accesses the Internet through the cellular network. Further, the first terminal 501 establishes a wireless communication connection to the second terminal 502.

After the first terminal 501 is connected to the second terminal 502, a projection source end in the first terminal 501 and the second terminal 502 may project a projected image onto a display of a projection destination end for display. For example, the first terminal 501 is used as the projection source end, and the second terminal 502 is used as the projection destination end. The first terminal 501 may project an interface displayed on a display of the first terminal 501 onto a display of the second terminal 502 for display.

Optionally, the terminal in embodiments of this application, for example, the first terminal 501 or the second terminal 502, may be a mobile phone, a tablet computer, a handheld computer, a PC, a television set, a cellular phone, a personal digital assistant (personal digital assistant, PDA), a wearable device (for example, a smartwatch), an in-vehicle computer, a game console, an augmented reality (augmented reality, AR)/virtual reality (virtual reality, VR) device, a smart home device, a smart city device, or the like. A specific form of the terminal is not specifically limited in embodiments. An operating system installed on the terminal includes but is not limited to iOS^{®}, Android^{®}, Harmony^{®}, Windows^{®}, Linux^{®}, or another operating system. In some embodiments, the terminal may be a fixed device, or may be a portable device. A specific type of the terminal and an operating system installed on the terminal are not limited in this application.

In FIG. 5, the first terminal 501 is a mobile phone or a tablet computer, and the second terminal 502 is a television set.

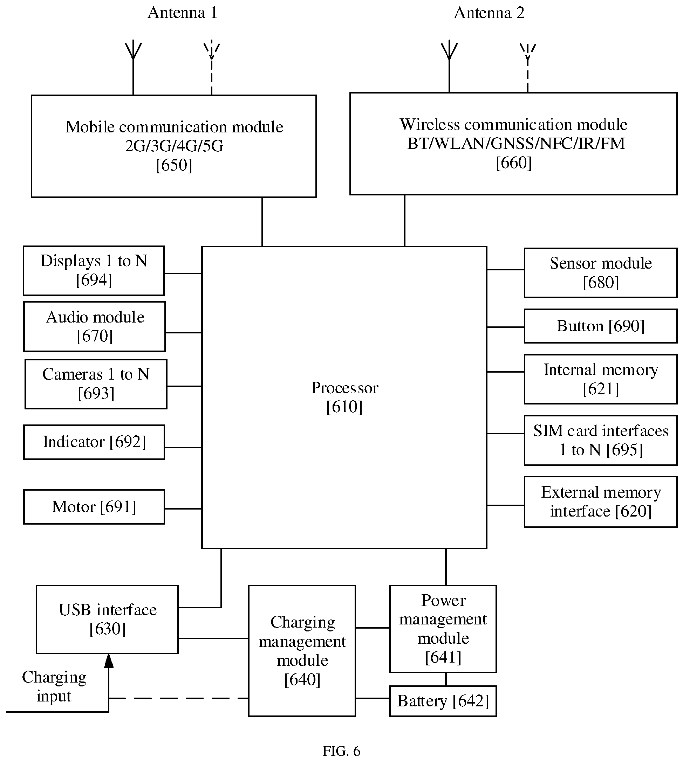

In this embodiment of this application, an example in which the terminal is a mobile phone is used. FIG. 6 is a diagram of a structure of a mobile phone 600 according to an embodiment of this application.

The mobile phone 600 may include: a processor 610, an external memory interface 620, an internal memory 621, a universal serial bus (universal serial bus, USB) interface 630, a charging management module 640, a power management module 641, a battery 642, an antenna 1, an antenna 2, a mobile communication module 650, a wireless communication module 660, an audio module 670, a sensor module 680, a button 690, a motor 691, an indicator 692, a camera 693, a display 694, a subscriber identification module (subscriber identification module, SIM) card interface 695, and the like.

The processor 610 may include one or more processing units. For example, the processor 610 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction execution.

A memory may be further disposed in the processor 610, and is configured to store instructions and data. In some embodiments, the memory in the processor 610 is a cache. The memory may store instructions or data just used or cyclically used by the processor 610. If the processor 610 needs to use the instructions or the data again, the processor may directly invoke the instructions or the data from the memory. This avoids repeated access, reduces waiting time of the processor 610, and improves system efficiency.

In some embodiments, the processor 610 may include one or more interfaces.

The charging management module 640 is configured to receive a charging input from a charger. The charger may be a wireless charger or a wired charger.

The power management module 641 is configured to connect the battery 642, the charging management module 640, and the processor 610. The power management module 641 receives input from the battery 642 and/or the charging management module 640, and supplies power to the processor 610, the internal memory 621, the display 694, the camera 693, the wireless communication module 660, and the like.

A wireless communication function of the mobile phone 600 may be implemented through the antenna 1, the antenna 2, the mobile communication module 650, the wireless communication module 660, the modem processor, the baseband processor, and the like.

The antenna 1 and the antenna 2 are configured to transmit and receive an electromagnetic wave signal. Each antenna in the mobile phone 600 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 650 may provide a wireless communication solution that includes 2G/3G/4G/5G or the like and that is applied to the mobile phone 600. The mobile communication module 650 may include at least one filter, a switch, a power amplifier, a low noise amplifier (low noise amplifier, LNA), and the like. In some embodiments, at least a part of functional modules in the mobile communication module 650 may be disposed in the processor 610. In some embodiments, at least a part of functional modules in the mobile communication module 650 and at least a part of functional modules in the processor 610 may be disposed in a same device.

The wireless communication module 660 may provide a wireless communication solution that is applied to the mobile phone 600, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 660 may be one or more devices that integrate at least one communication processing module.

In some embodiments, in the mobile phone 600, the antenna 1 and the mobile communication module 650 are coupled, and the antenna 2 and the wireless communication module 660 are coupled, so that the mobile phone 600 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like.

The mobile phone 600 implements a display function through the GPU, the display 694, the application processor, and the like. The GPU is a microprocessor for image processing, and is connected to the display 694 and the application processor. The GPU is configured to: perform mathematical and geometric computation, and render an image. The processor 610 may include one or more GPUs, which execute program instructions to generate or change display information.

The display 694 is configured to display an image, a video, and the like. The display 694 includes a display panel. In some embodiments, the mobile phone 600 may include one or N displays 694, where N is a positive integer greater than 1.

The mobile phone 600 may implement an image shooting function through the ISP, the camera 693, the video codec, the GPU, the display 694, the application processor, and the like.

The camera 693 is configured to capture a static image or a video. In some embodiments, the mobile phone 600 may include one or N cameras 693, where N is a positive integer greater than 1.

The external memory interface 620 may be configured to connect to an external storage card, for example, a micro SD card, to extend a storage capability of the mobile phone 600. The external storage card communicates with the processor 610 through the external memory interface 620, to implement a data storage function. For example, files such as music and videos are stored in the external storage card.

The internal memory 621 may be configured to store computer-executable program code. The executable program code includes instructions. The internal memory 621 may include a program storage area and a data storage area. The program storage area may store an operating system, an application required by at least one function (for example, a voice playing function or an image playing function), and the like. The data storage area may store data (for example, audio data or an address book) created during use of the mobile phone 600, and the like. In addition, the internal memory 621 may include a high-speed random access memory, or may include a nonvolatile memory, for example, at least one magnetic disk storage device, a flash memory, or a universal flash storage (universal flash storage, UFS). The processor 610 runs instructions stored in the internal memory 621 and/or instructions stored in the memory disposed in the processor, to perform various function applications of the mobile phone 600 and data processing.

The mobile phone 600 may implement an audio function, for example, music playing or recording, through the audio module 670, the application processor, and the like.

The audio module 670 is configured to convert digital audio information into an analog audio signal for output, and is further configured to convert an analog audio input into a digital audio signal. The audio module 670 may be further configured to encode and decode an audio signal. In some embodiments, the audio module 670 may be disposed in the processor 610, or some functional modules in the audio module 670 are disposed in the processor 610.

Optionally, the sensor module 680 may include one or more of a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 690 includes a power button, a volume button, and the like. The button 690 may be a mechanical button, or may be a touch button. The mobile phone 600 may receive a button input, and generate a button signal input related to a user setting and function control of the mobile phone 600.

The motor 691 may generate a vibration prompt. The motor 691 may be configured to provide an incoming call vibration prompt and a touch vibration feedback.

The indicator 692 may be an indicator light, may be configured to indicate a charging status and a power change, and may be configured to indicate a message, a missed call, a notification, and the like.

The SIM card interface 695 is configured to connect to a SIM card.

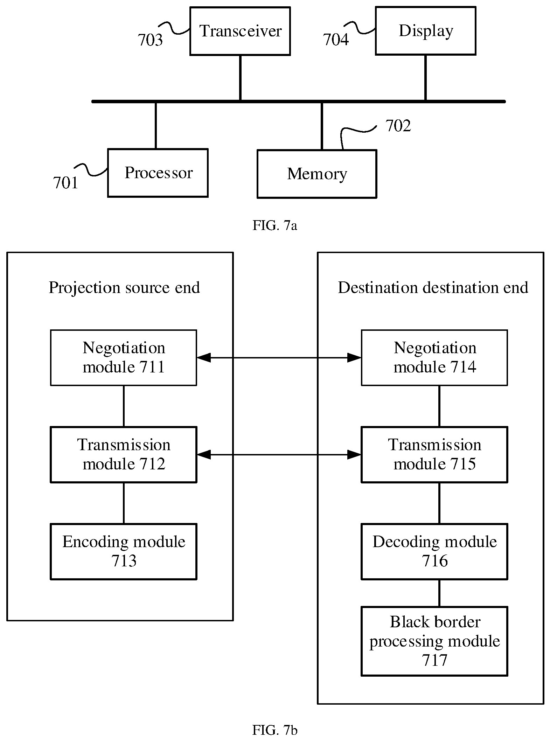

It may be understood that the foregoing uses only a mobile phone as an example to describe a structure of the terminal in embodiments of this application, but does not constitute a limitation on a structure and a form of the terminal. The structure and the form of the terminal are not limited in embodiments of this application. For example, FIG. 7a shows another example structure of a terminal according to an embodiment of this application. As shown in FIG. 7a, the terminal includes a processor 701, a memory 702, a transceiver 703, and a display 704. For implementation of the processor 701, the memory 702, and the display 704, refer to implementation of the processor, the memory, and the display of the mobile phone 600. The transceiver 703 is configured to interact between the terminal and another device (for example, an electronic device). The transceiver 703 may be a device based on Wi-Fi, Bluetooth, or another communication protocol.

In some other embodiments of this application, the terminal may include more or fewer components than those shown in FIG. 6 and FIG. 7a, or combine some components, or split some components, or have a different component arrangement. The components shown in the figure may be implemented by hardware, software, or a combination of software and hardware.

For example, the software architecture of the terminal may be a layered architecture, an event-driven architecture, a microkernel architecture, a microservice architecture, a cloud architecture, or the like. FIG. 7b is a block diagram of a software structure of a terminal according to an embodiment of this application. As shown in FIG. 7b, a projection source end includes a negotiation module 711, a transmission module 712, an encoding module 713, and the like. A projection destination end includes a negotiation module 714, a transmission module 715, a decoding module 716, a black border processing module 717, and the like.

The negotiation module 711 of the projection source end is configured to interact with the negotiation module 714 of the projection destination end, to negotiate a screen resolution of the projection source end. Through this negotiation process, the projection destination end may obtain the screen resolution of the projection source end. The encoding module 713 of the projection source end is configured to encode a projected image of the projection source end, and then send an encoded projected image to the transmission module 715 of the projection destination end through the transmission module 712. Correspondingly, after the projection destination end receives, through the transmission module 715, the encoded projected image from the projection source end, the decoding module 716 performs decoding to obtain the projected image. Then, the black border processing module 717 performs one or more of the following operations on the obtained projected image: black border detection, adding a black border to the projected image based on the screen resolution of the projection source end, and cropping the black border. For specific descriptions of these operations, refer to the following descriptions.

It may be understood that the software modules included in the projection source end and the projection destination end shown in FIG. 7b are merely used as a possible division manner, and may include more or fewer modules, or may have another division manner. This is not limited in this application.

All technical solutions involved in the following embodiments may be implemented in an apparatus having the structures shown in FIG. 6, FIG. 7a, and FIG. 7b.

It may be understood that, in embodiments of this application, a first terminal and/or a second terminal may perform a part or all of steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

The following describes in detail the projection method provided in embodiments of this application by using an example in which the first terminal is a mobile phone, the second terminal is a television set, the mobile phone is used as a projection source end, and the television set is used as a projection destination end.

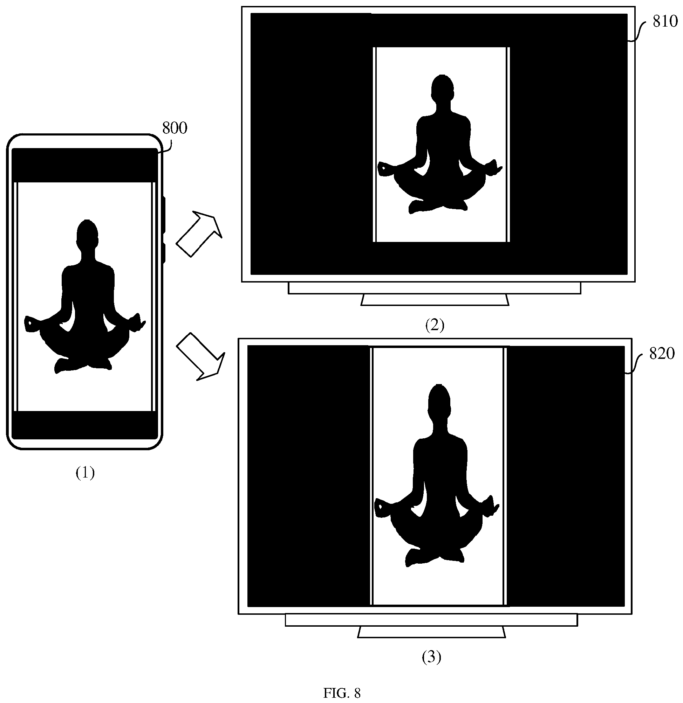

In some projection scenarios, the television set may display a projected image in full screen. For example, FIG. 8 is a diagram of a full-screen display scenario according to an embodiment of this application. For example, as shown in (1) in FIG. 8, the mobile phone displays an image interface 800, where both an upper part and a lower part of the image interface 800 include a black border. The mobile phone may project the image interface 800 onto the television set for display. Correspondingly, after receiving the image interface 800 projected by the mobile phone, the television set may display the image interface 800 in full screen, that is, the television set displays only one projected image.

In some embodiments, the television set may not crop a black border (for example, the black borders included in the upper part and the lower part of the image interface 800) included in the projected image, and add a black border to the projected image only based on a screen resolution of the mobile phone, so that a ratio of a resolution of the projected image to which the black border is added is the same as a ratio of a screen resolution of the television set. For example, the television set may display a projected image 810 shown in (2) in FIG. 8. In the projected image 810, the upper part, the lower part, a left part, and a right part of the image interface 800 all include black borders.

In some other embodiments, the television set may crop a black border (for example, the black borders included in the upper part and the lower part of the image interface 800) included in the projected image. For example, the television set may add a black border to the projected image based on a screen resolution of the mobile phone. After the adding is completed, some black borders (for example, the black borders included in the upper part and the lower part of the image interface 800) included in the projected image are cropped, so that a ratio of a resolution of a projected image obtained after the black borders are cropped is the same as a ratio of the screen resolution of the television set. For example, the television set may display a projected image 820 shown in (3) in FIG. 8. In the projected image 820, only a left part and a right part of the image interface 800 include black borders.

In some other projection scenarios, the television set may display a projected image in split screen.

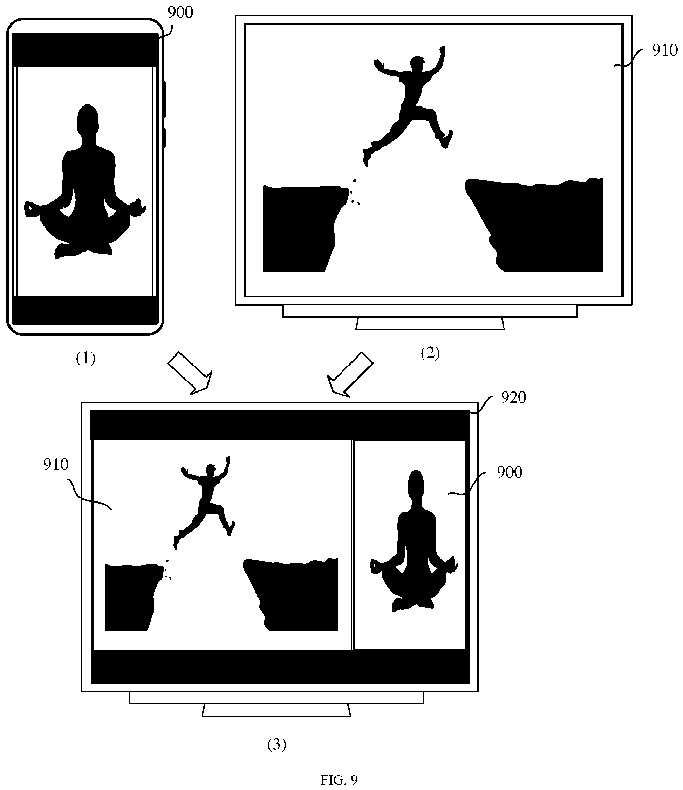

Specifically, in some examples, FIG. 9 is a diagram of a split-screen display scenario according to an embodiment of this application. The split-screen display scenario may mean that the television set displays one or more interfaces of the television set and one or more projected images in split screen. Optionally, the one or more projected images may be projected from a same terminal, or may be projected from different terminals. For example, as shown in (1) in FIG. 9, the mobile phone displays an image interface 900. As shown in (2) in FIG. 9, the television set displays a video interface 910. The mobile phone may project the image interface 900 onto the television set for display. Correspondingly, after receiving the image interface 900 projected by the mobile phone, the television set does not add a black border to the image interface 900 based on a screen resolution of the mobile phone, but directly crops black borders (for example, upper and lower black borders) of the image interface 900. After the cropping is completed, an image interface 900 and the video interface 910 are displayed in split screen. For example, the television set may display a split screen interface 920 (namely, a second image) shown in (3) in FIG. 9. In the split screen interface 920, the video interface 910 originally displayed on the television set and the image interface 900 projected by the mobile phone are displayed in split screen. In FIG. 9, for example, the television set displays only one interface of the television set and one projected image.

In some other examples, the split-screen display scenario may alternatively mean that the television set displays, in split screen, a plurality of projected images projected by a same projection source end. Optionally, the plurality of projected images may be different interfaces displayed on the projection source end at different moments, and the plurality of projected images may belong to a same application, or may belong to different applications. For example, the projection source end is the mobile phone. The mobile phone first displays a running interface of a social application, and then the mobile phone may project the running interface of the social application onto the television set for display. Then, the mobile phone switches the social application to the background for running, and displays a running interface of a game application. Then, the mobile phone projects the running interface of the game application onto the television set for display. Correspondingly, the television set receives the running interface of the social application and the running interface of the game application, and the television set displays the running interfaces of the two applications in split screen.

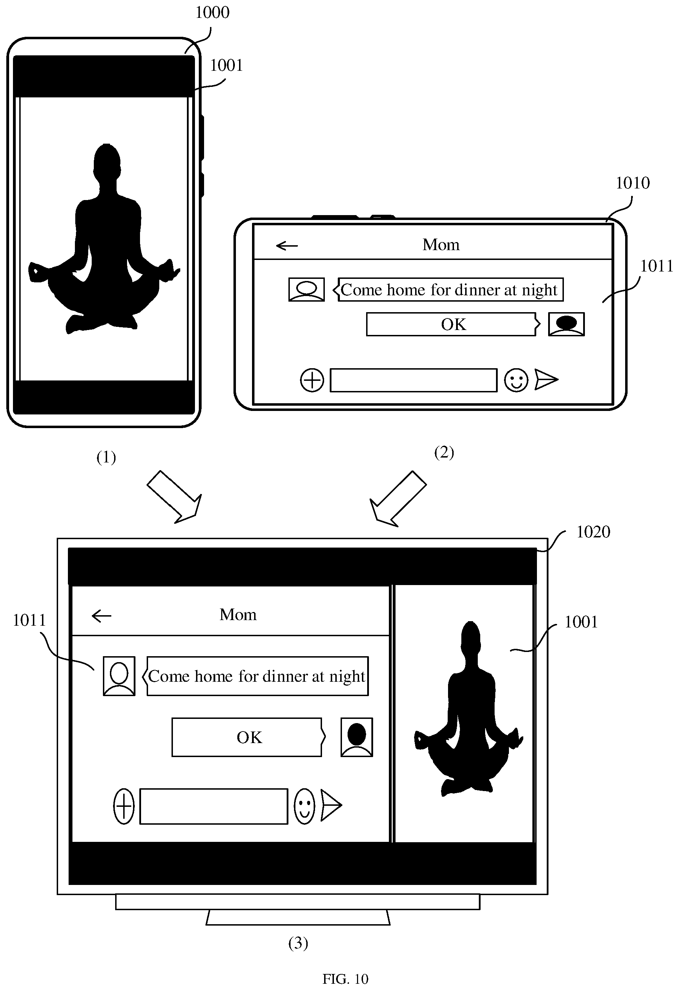

In some other examples, FIG. 10 is a diagram of a multi-channel projection scenario according to an embodiment of this application. The multi-channel projection scenario means that a plurality of different projection source ends may project a plurality of projected images onto a same projection destination end for display. For example, the plurality of different projection source ends are a mobile phone 1000 and a mobile phone 1010, and the projection destination end is a television set. Optionally, screen resolutions of the mobile phone 1000 and the mobile phone 1010 may be the same or different.

For example, as shown in (1) in FIG. 10, the mobile phone 1000 displays an image interface 1001, where black borders are included in an upper part and a lower part of the image interface 1001. As shown in (2) in FIG. 10, the mobile phone 1010 displays a chat interface 1011, where the chat interface 1011 does not include a black border. Both the mobile phone 1000 and the mobile phone 1010 may project a currently displayed interface onto the television set for display. Correspondingly, after receiving projected images projected by the mobile phone 1000 and the mobile phone 1010, the television set does not add black borders to the projected images based on screen resolutions of the mobile phones, but directly crops the black borders of the projected images. For example, because the upper and lower parts of the image interface 1001 include the black borders, but the chat interface 1011 does not include the black border, the television set may crop only the black borders on the upper part and the lower part of the image interface 1001. After the cropping is completed, the television set displays the image interface 1001 and the chat interface 1011 in split screen. For example, the television set may display a split screen interface 1020 (namely, a second image) shown in (3) in FIG. 10. In the split screen interface 1020, the image interface 1001 projected by the mobile phone 1000 and the chat interface 1011 projected by the mobile phone 1010 are displayed in split screen.

Optionally, in the scenario in which the television set displays the projected images in split screen, an area in which a projected image is specifically displayed on a screen of the television set may be random, or may be preset, or may be fixed, or may dynamically change. This is not limited in this application.

Optionally, the television set may alternatively display the projected images in another manner, for example, in a partial overlapping manner. This projection process is the same as that of the television set that uses split-screen display.

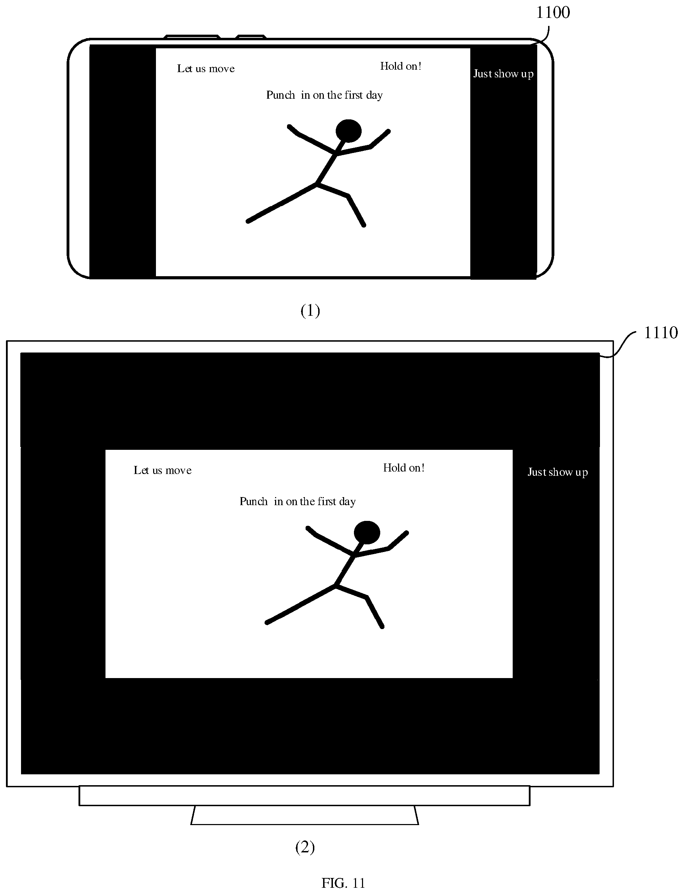

In some other projection scenarios, a projected image displayed by the television set may include a caption, a bullet comment, and/or the like. A bullet comment scenario is used as an example. For example, FIG. 11 is a diagram of a bullet comment scenario according to an embodiment of this application. As shown in (1) in FIG. 11, the mobile phone displays a video interface 1100, where the video interface 1100 includes one or more bullet comments, for example, "Let us move", "Punch in on the first day", "Hold on!", and "Just show up". Optionally, content in the one or more bullet comments may be displayed on a black border included in the video interface 1100. For example, all three words in the bullet comment "Just show up" are displayed on a right black border included in the video interface 1100. The mobile phone may project the video interface 1100 onto the television set for display. Because both a left black border and the right black border included in the video interface 1100 are used to display bullet comments, after the television set receives the video interface 1100 projected by the mobile phone, the television set may not perform a cropping operation on the black borders included in the video interface 1100, but directly add black borders to the video interface 1100 based on a screen resolution of the mobile phone, so that a ratio of a resolution of a video interface 1100 to which the black borders are added is the same as a ratio of a screen resolution of the television set. For example, the television set may display a projected image 1110 (namely, a second image) shown in (2) in FIG. 11. In the projected image 1110, an upper part, a lower part, a left part, and a right part of the video interface 1100 all include the black borders.

It may be understood that, in the foregoing example, all the black borders included in the projected image received by the television set are used to display data (for example, the bullet comment). Alternatively, none of a part or all of the black borders included in the projected image received by the television set may be used to display any data. For example, the data includes but is not limited to one or more of the caption or the bullet comment. For example, neither left nor right black borders included in the video interface 1100 are used to display the caption and/or the bullet comment. For another example, in the left and right black borders included in the video interface 1100, only the right black border is used to display a caption and/or a bullet comment.

Optionally, in the projection scenario, when the projected image received by the television set includes the black borders, if none of the black borders is used to display any data, that is, the caption and/or the bullet comment are/is displayed in an area other than the black borders included in the projected image received by the television set. Alternatively, some black borders are not used to display any data, that is, the caption and/or the bullet comment are/is displayed only on some of the black borders included in the projected image received by the television set. In this case, the television set may also crop the black borders included in the projected image, for example, crop a part or all of the black borders that are included in the projected image and that are not used to display any data, that is, perform the black border cropping operation. In this example, for a specific implementation of performing the black border cropping operation by the television set, refer to the following description.

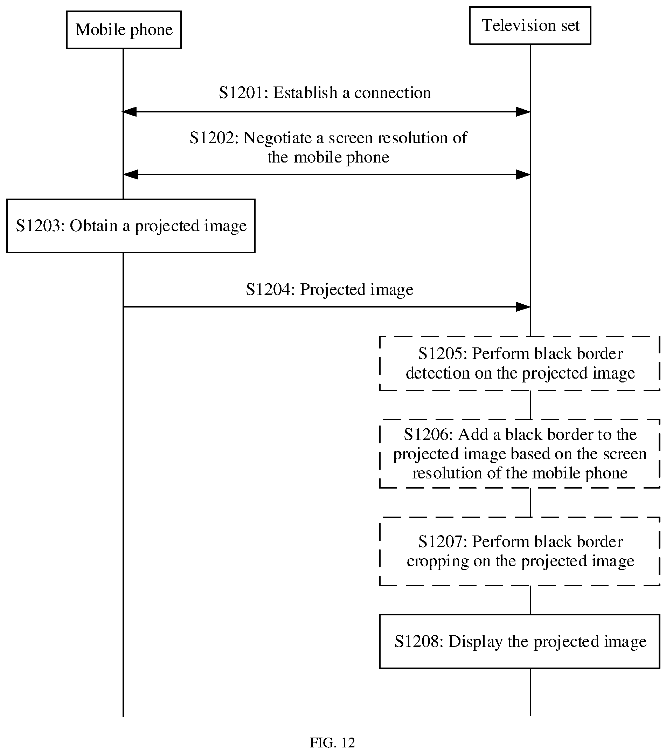

For example, FIG. 12 is a schematic flowchart of a projection method according to an embodiment of this application. The projection method is applicable to, but is not limited to, the foregoing projection scenarios. As shown in FIG. 12, the method includes the following steps.

S1201: A mobile phone establishes a connection to a television set.

There are a plurality of manners for establishing a connection between the mobile phone and the television set. In some embodiments, the mobile phone and the television set may establish a connection by using a wired communication technology. For example, the mobile phone and the television set may establish a connection through a data cable.

In some other embodiments, the mobile phone and the television set may establish a connection by using a wireless communication technology. In some examples, there are two possible manners for establishing a connection between terminals in a wireless communication manner. In one manner, the terminals know connection information of each other, and in the other manner, the terminals have a transmission capability.

The connection information may be a device representation of the terminal, for example, an internet protocol (internet protocol, IP) address, a port number, or a login account of the terminal. The login account of the terminal may be an account provided by an operator for a user, for example, a HUAWEI account. The login account of the terminal may alternatively be an application account, for example, an account of a social application or an account of a video application.

The transmission capability that the terminal has may be a near-field communication capability, or may be a long-distance communication capability. That is, a wireless communication protocol used for establishing a connection between the terminals, for example, the mobile phone and the television set, may be a near field communication protocol like a Wi-Fi protocol, a Bluetooth protocol, or an NFC protocol, or may be a cellular network protocol. For example, the user may use the mobile phone to touch an NFC tag of the television set. The mobile phone reads connection information stored in the NFC tag, for example, the connection information includes the IP address of the television set. Then, the mobile phone may establish, based on the IP address of the television set, a connection to the television set through another protocol, for example, the Bluetooth protocol

For another example, a Bluetooth function and a Wi-Fi function are enabled on both the mobile phone and the television set. The mobile phone may broadcast a Bluetooth signal, to discover a surrounding terminal. For example, the mobile phone may display a discovered device list. The discovered device list may include an identifier of a device discovered by the mobile phone, for example, include an identifier of the television set. In a process of discovering a device, the mobile phone may also exchange connection information, for example, an IP address, with the discovered device. Then, after the mobile phone receives an operation of selecting the identifier of the television set from the displayed device by the user, the mobile phone may establish, based on the IP address of the television set, a connection to the television set through the Wi-Fi protocol. For another example, both the mobile phone and the television set are connected to a cellular network, and a same HUAWEI account is logged in on the mobile phone and the television set. The mobile phone and the television set may establish a connection based on the HUAWEI account and the cellular network.

Optionally, a manner for establishing a connection between the mobile phone and the television set is not limited in this application.

S1202: The mobile phone negotiates a screen resolution of the mobile phone with the television set.

Based on this step, the television set may obtain the screen resolution of the mobile phone. It may be understood that, in this embodiment of this application, the screen resolution of the mobile phone is determined. Therefore, "negotiation" means that the mobile phone and the television set may interact with each other. For example, the television set sends a request message to the mobile phone, to request the screen resolution of the mobile phone. Correspondingly, the mobile phone sends a response message to the television set, where the response message carries the screen resolution of the mobile phone, and therefore the television set may obtain the screen resolution of the mobile phone. It may be understood that, because the screen resolution of the mobile phone is the same as a resolution of a projected image projected by the mobile phone onto the television set, an objective of obtaining, by the television set, the screen resolution of the mobile phone is to determine the resolution of the projected image transmitted by the mobile phone.

Optionally, in the split-screen display scenario and the multi-channel projection scenario, screen resolutions of different projection source ends may be the same or may be different, and a projection destination end may separately negotiate screen resolutions of corresponding projection source ends with the different projection source ends.

In some examples, the mobile phone and the television set may use a negotiation process used by an existing projection protocol, for example, a negotiation process based on a real-time streaming protocol (real-time streaming protocol, RTSP) used by a miracast protocol, to negotiate the screen resolution of the mobile phone. The negotiation process based on the RTSP is an existing technology, and details are not described in this specification. For example, in this step, a message exchanged between the mobile phone and the television set (for example, the request message sent by the television set to the mobile phone, or the response message sent by the mobile phone to the television set) may reuse a message in an existing RTSP negotiation process. For example, the screen resolution of the mobile phone sent by the mobile phone to the television set may be carried in a SETUP message in the RTSP negotiation process, or may be carried in another message in the RTSP negotiation process. Certainly, the message exchanged between the mobile phone and the television set may not reuse the message in the existing RTSP negotiation process. For example, the screen resolution of the mobile phone sent by the mobile phone to the television set may be carried in a created message.

In another example, the mobile phone and the television set may also use another negotiation process. This is not limited in this application.

Optionally, in this step, because interaction needs to be performed between the mobile phone and the television set, a negotiation process between the mobile phone and the television set may be implemented based on a transmission control protocol (transmission control protocol, TCP), or certainly, may be implemented based on another protocol.

S1203: The mobile phone obtains a projected image.

The mobile phone may obtain content currently displayed on a display, for example, various content such as a video image, a picture in picture, a floating window (for example, a video chat window), a picture, or a PPT, as the projected image. Specific content of the projected image is not limited in this application.

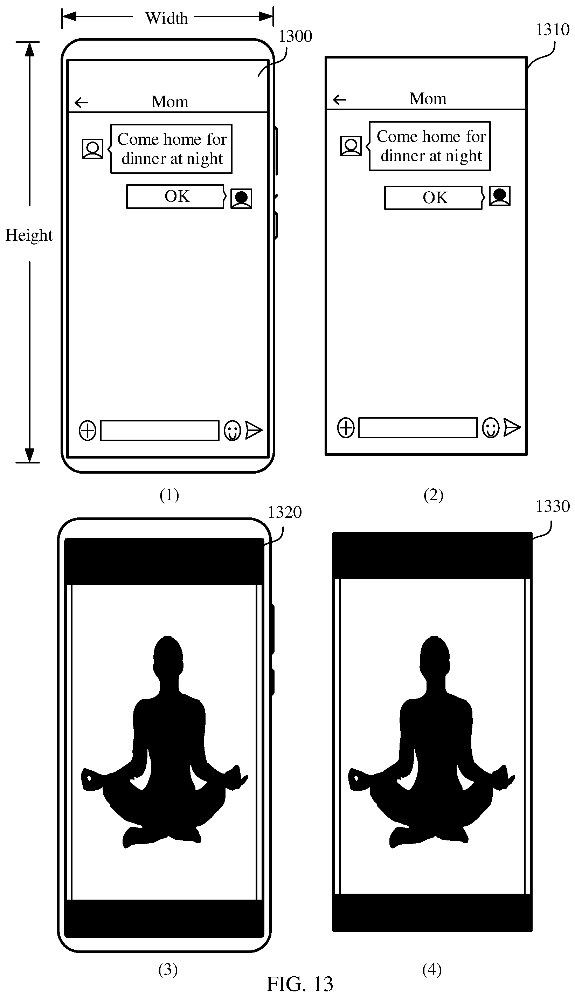

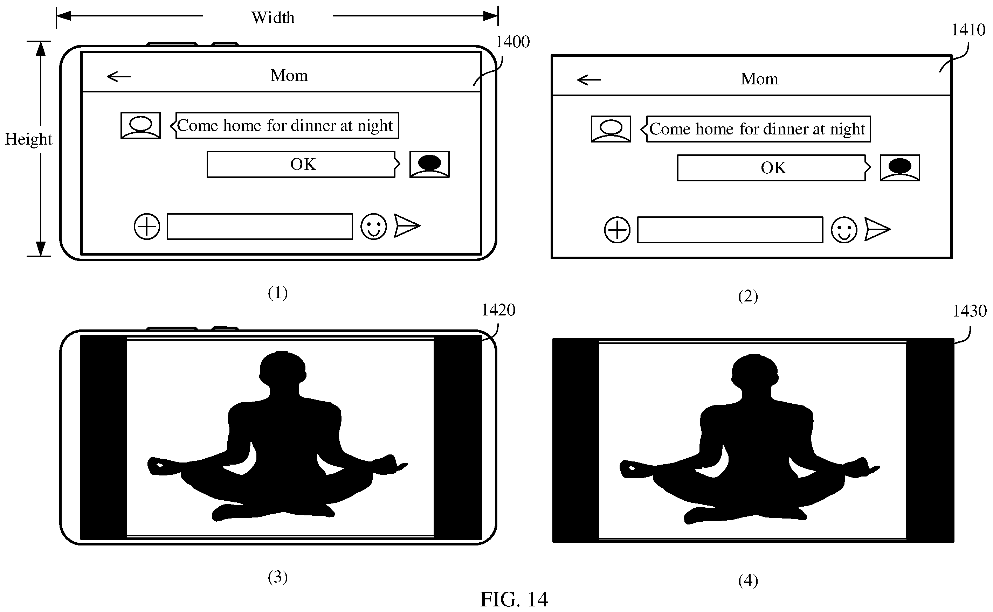

In some scenarios, the projected image obtained by the mobile phone does not include a black border. For example, when the mobile phone displays a chat interface 1300 shown in (1) in FIG. 13 in portrait mode, the projected image obtained by the mobile phone is a projected image 1310 shown in (2) in FIG. 13, and the projected image 1310 does not include a black border. For another example, when the mobile phone displays a chat interface 1400 shown in (1) in FIG. 14 in landscape mode, the projected image obtained by the mobile phone may be a projected image 1410 shown in (2) in FIG. 14, and the projected image 1410 does not include a black border.

In some other scenarios, the projected image obtained by the mobile phone includes a black border. For example, when the mobile phone displays an image interface 1320 shown in (3) in FIG. 13 in portrait mode, the projected image obtained by the mobile phone is a projected image 1330 shown in (4) in FIG. 13, and the projected image 1330 includes black borders. For example, the black borders exist on an upper part and a lower part of the projected image 1330. For another example, when the mobile phone displays an image interface 1420 shown in (3) in FIG. 14 in landscape mode, the projected image obtained by the mobile phone is a projected image 1430 shown in (4) in FIG. 14, and black borders exist on a left part and a right part of the projected image 1430.

In other words, when an interface displayed on the mobile phone does not include a black border, the projected image obtained by the mobile phone may not include a black border. When the interface displayed on the mobile phone includes a black border, the projected image obtained by the mobile phone may also include a black border. Optionally, one or more positions of the upper part, the lower part, the left part, the right part, and the like of the projected image may include the black border.

Optionally, step S1202 and step S1203 may be performed simultaneously or sequentially. Step S1202 may be performed first, or step S1203 may be performed first. This is not limited in this application.

Optionally, in this scenario, the black border included in the projected image obtained by the mobile phone may be used to display data, for example, in a caption and/or bullet comment scenario, or may not be used to display data, for example, in a full-screen display scenario.

S1204: The mobile phone transmits the projected image (namely, a first image) to the television set. Correspondingly, the television set receives the projected image from the mobile phone.

The mobile phone may directly transmit the obtained projected image (the projected image 1310 shown in (2) in FIG. 13, the projected image 1330 shown in (4) in FIG. 13, the projected image 1410 shown in (2) in FIG. 14, the projected image 1430 shown in (4) in FIG. 14, or the like) to the television set.

Optionally, the mobile phone may encode the obtained projected image, and then send an encoded projected image to the television set. Correspondingly, after receiving the projected image, the television set first decodes the projected image, and then obtains the projected image. Optionally, the television set may transmit the projected image based on a user datagram protocol (user datagram protocol, UDP), or may transmit the projected image based on another protocol. This is not limited in this application.

In this way, the mobile phone directly transmits the obtained projected image to the television set, and the mobile phone no longer performs a black border adding operation on the projected image. Therefore, a data amount of the projected image transmitted between the mobile phone and the television set is reduced, and transmission efficiency of the projected image can be improved.

S1205: The television set performs black border detection on the projected image.

In some projection scenarios, for example, in the foregoing full-screen display scenario, split-screen display scenario, and multi-channel projection scenario, the television set may perform a black border detection operation on the projected image.

In some other projection scenarios, for example, in the foregoing caption and/or bullet comment scenario, the television set may not perform a black border detection operation on the projected image. Optionally, in this scenario, the television set may alternatively perform the black border detection operation on the projected image.

In some embodiments, when determining that the received projected image is a projected image of a preset type, the television set may not perform the black border detection operation. When determining that the received projected image does not belong to a projected image of a preset type, the television set performs the black border detection operation. In a possible implementation, when receiving a frame of projected image, the television set may determine, based on an identifier of the projected image, whether the projected image is the projected image of the preset type. In another possible implementation, when receiving a frame of projected image, the television set may determine, based on an indication message of the mobile phone, whether the projected image is the projected image of the preset type. A manner of determining, by the television set, whether a frame of projected image is the projected image of the preset type is not limited in this application.

For example, the projected image of the preset type may include but is not limited to a projected image including a caption and/or a bullet comment. Optionally, the projected image of the preset type may be set by a developer based on an actual requirement. This is not limited in this application.

Optionally, when the television set performs the black border detection operation on the projected image, the television set may perform black border detection on each received frame of projected image, or may perform black border detection once at an interval of m frames of projected images, where m is a positive integer, and m may be a fixed value or may dynamically change. An occasion of performing black border detection by the television set is not limited in this application.

In some embodiments, the black border detection operation may alternatively be performed by the mobile phone side, and the television set side does not need to perform the black border detection operation again. Optionally, the television set side may learn, from the mobile phone side, one or more of the following cases: whether the projected image includes a black border, a specific position including the black border, a size of the included black border, and the like. For example, after performing black border detection on the projected image, the mobile phone sends a result of black border detection to the television set. Correspondingly, the television set may learn one or more of the foregoing cases after receiving the result of black border detection of the projected image sent by the mobile phone.

The following describes a method for performing black border detection by a television set by using an example in which the television set performs black border detection on a projected image.

For example, if a screen resolution of a mobile phone is 1920x1080P, a resolution of the projected image transmitted by the mobile phone to the television set is also 1920x1080P. Correspondingly, the resolution of the projected image received by the television set is also 1920x1080P.

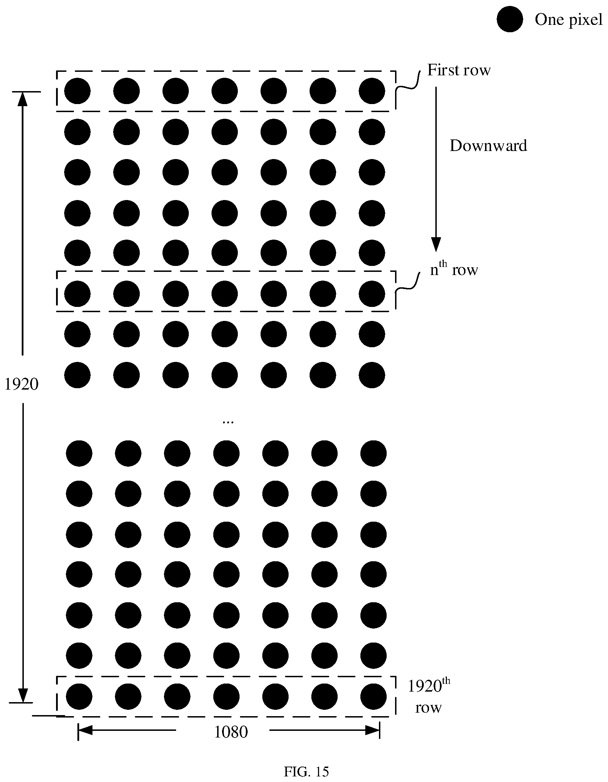

For example, the mobile phone uses a portrait-mode display manner. As shown in FIG. 15, the projected image (the projected image 1310 shown in (2) in FIG. 13, the projected image 1330 shown in (4) in FIG. 13, or the like) includes 1920 pixels in a height direction and 1080 pixels in a width direction. For the projected image, the television set may perform detection from an outer pixel to an inner pixel. In some examples, the television set may detect each pixel. For example, the television set detects whether a black border exists on an upper part of the projected image. The television set first detects the first row of pixels on the upper part of the projected image. If determining that all the first row of pixels is black, the television set determines that the first row of pixels is a black border, and continues to detect the second row of pixels downward. If determining that the second row of pixels is also a black border, the television set continues to detect the third row of pixels downward until the nth row of pixels is detected, where n is a positive integer. If determining that some pixels in the nth row of pixels are not black, the television set determines that the nth row of pixels is not a black border. In this case, the television set may determine that the first row of pixels to the (n-1)th row of pixels on the upper part are black borders.

In some other examples, the television set may perform sampling detection on the pixel. For example, the television set first detects the first row of pixels on the upper part, and if determining that the first row of pixels is a black border, the television set continues to detect the kth row of pixels downward, where k is a positive integer. If determining that all the kth row of pixels is a black border, the television set continues to detect the (2k-1)th row of pixels downward. If determining that the (2k-1)th row of pixels is not a black border, the television set detects pixels between the kth row of pixels and the (2k-1)th row of pixels. For these pixels, the television set may perform detection on all the pixels, or may perform sampling detection until it is determined that specific pixels are black borders. In view of this solution, a quantity of pixels detected by the television set can be reduced, and black border detection efficiency can be improved.

Optionally, the television set may alternatively perform black border detection in another manner, for example, perform detection from an inner pixel to an outer pixel. For example, the television set may perform detection from a middle row of pixels upward. A manner of performing black border detection by the television set is not limited in this application.

Similarly, for a process of detecting, by the television set, whether a black border exists in another position (for example, the lower part, the left part, the right part, or the like) of the projected image, and a size of the black border, refer to the descriptions of the foregoing examples. Similarly, when the projected image (for example, the projected image 1410 shown in (2) in FIG. 14, the projected image 1430 shown in (4) in FIG. 14) received by the television set is an interface displayed by the mobile phone in landscape mode, for a method for detecting, by the television set, whether a black border exists, refer to the foregoing descriptions.

In this way, when the television set performs black border detection on the projected image, because the projected image is an interface originally displayed by the mobile phone, the mobile phone does not add a black border to the projected image, so that a quantity of pixels in the projected image is much less than a quantity of pixels in the projected image to which a black border is added. Therefore, when the television set (namely, the projection destination end) performs black border detection, a quantity of pixels to be detected is less, so that black border detection efficiency can be improved. In addition, for a high-spec projection destination end, for example, a 4K television set, because black border detection efficiency is improved, a time requirement of the projection destination end on black border detection can be met. For a low-configuration projection destination end, even if a computing capability of the projection destination end is limited, because black border detection efficiency is improved, a requirement of performing black border detection in real time can be met.

S1206: The television set adds a black border to the projected image based on the resolution of the mobile phone.

In some projection scenarios, for example, the foregoing split-screen display scenario and the foregoing multi-channel projection scenario, the television set may not perform this step, and when it is determined, according to step S1206, that a black border exists in the projected image, step S1207 is directly performed.

In some other projection scenarios, for example, the foregoing full-screen display scenario and the foregoing caption and/or bullet comment scenario, the television set may perform this step.

The example in which the screen resolution of the mobile phone is 1920x1080P and the screen resolution of the television set is 2160x3840P is still used. In this case, the resolution of the projected image received by the television set is also 1920x1080P. When the mobile phone uses the portrait-mode display manner, a height-width ratio of the projected image (the projected image 1310 shown in (2) in FIG. 13, the projected image 1330 shown in (4) in FIG. 13, or the like) is 1920:1080. When the mobile phone uses a landscape-mode display manner, a height-width ratio of the projected image (the projected image 1410 shown in (2) in FIG. 14, the projected image 1430 shown in (4) in FIG. 14, or the like) is 1080:1920.

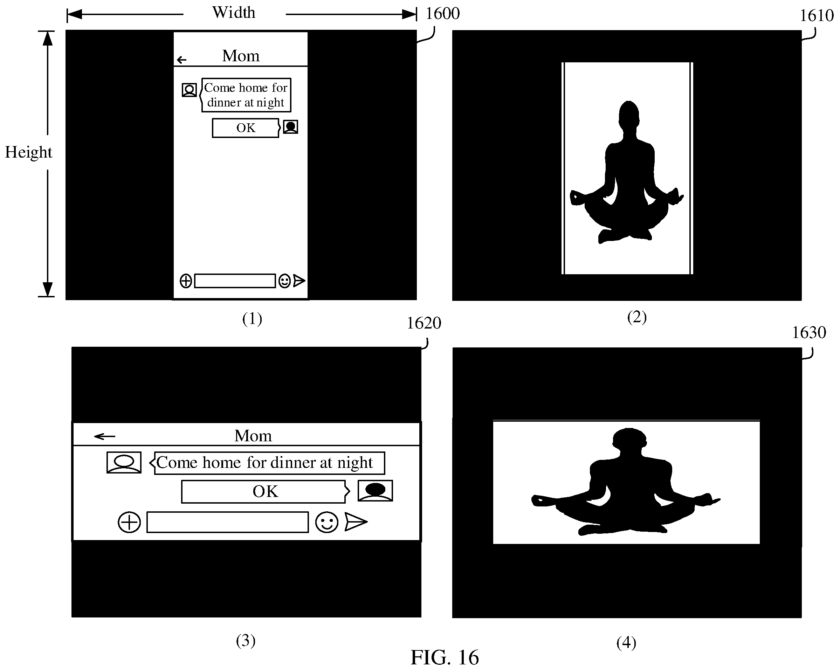

The television set can add the black border to the projected image. In some examples, the television set may add the black border to any position (for example, one or more positions of the upper part, the lower part, the left part, and the right part) of the projected image. Optionally, sizes of black borders added by the television set to positions of the projected image may be the same or may be different. The projected image 1310 shown in (2) in FIG. 13 is used as an example. A projected image obtained after the television set adds black borders to the projected image 1310 may be a projected image 1600 shown in (1) in FIG. 16. The projected image 1330 shown in (4) in FIG. 13 is used as an example. A projected image obtained after the television set adds black borders to the projected image 1330 may be a projected image 1610 shown in (2) in FIG. 16. The projected image 1410 shown in (2) in FIG. 14 is used as an example. A projected image obtained after the television set adds black borders to the projected image 1410 may be a projected image 1620 shown in (3) in FIG. 16. The projected image 1430 shown in (4) in FIG. 14 is used as an example. A projected image obtained after the television set adds black borders to the projected image 1430 may be a projected image 1630 shown in (4) in FIG. 16.

In some other examples, the television set may add a black border to a fixed position of the projected image. Generally, a form of the mobile phone in portrait mode is usually a form shown in (1) in FIG. 13. In other words, a height of the mobile phone is greater than a width of the mobile phone. A form of the mobile phone in landscape mode is usually a form shown in (1) in FIG. 14. In other words, a height of the mobile phone is greater than a width of the mobile phone. A form of the television set is usually similar to the form of the mobile phone in landscape mode. In other words, a height of the television set is less than a width of the television set. Therefore, when the mobile phone displays the projected image (for example, the projected image 1310 shown in (2) in FIG. 13, or the projected image 1330 shown in (4) in FIG. 13) in portrait mode, a height of the projected image is greater than a width of the projected image. Therefore, for example, the television set may add a black border to the left part and/or the right part of the projected image in a manner shown in (1) or (2) in FIG. 16. When the mobile phone displays the projected image (for example, the projected image 1410 shown in (2) in FIG. 14, or the projected image 1430 shown in (4) in FIG. 14) in landscape mode, a height of the projected image is less than a width of the projected image. Therefore, for example, the television set may add a black border to the upper part and/or the lower part of the projected image in a manner shown in (3) or (4) in FIG. 16.

In (1) and (2) in FIG. 16, for example, the television set adds black borders to the left part and the right part of the projected image, and the added black borders have the same size. In (3) and (4) in FIG. 16, for example, the television set adds black borders to the upper part and the lower part of the projected image, and the added black borders have the same size.

Optionally, this application does not limit a specific position at which the television set adds the black border to the projected image, and does not limit a size of the added black border or the like.

A ratio of a resolution of the projected image (for example, each projected image in FIG. 16) to which the black border is added is the same as a ratio of the screen resolution of the television set, for example, both height-width ratios are 2160:3840.

Certainly, in these projection scenarios, for example, the foregoing full-screen display scenario and the foregoing caption and/or bullet comment scenario, the television set may not perform this step, but directly perform step S1207. For example, in the full-screen display scenario, when the projected image received by the television set includes the black border, and if a ratio of a resolution of the projected image obtained after cropping and the ratio of the screen resolution of the television set may be the same in a manner of black border cropping, the television set may directly perform step S 1207 to crop a part or all of the black border included in the received projected image, so that the ratio of the resolution of the projected image obtained after cropping is the same as the ratio of the screen resolution of the television set.

For another example, in the caption and/or bullet comment scenario, when the projected image received by the television set includes the black border and none of a part or all of the black border is used to display any data, and if a ratio of a resolution of the projected image obtained after cropping and the ratio of the screen resolution of the television set may be the same in a manner of black border cropping, the television set may also perform step S1207 to crop a part or all of the black border that is not used to display any data and that is included in the received projected image, so that the ratio of the resolution of the projected image obtained after cropping is the same as the ratio of the screen resolution of the television set.

It may be understood that this step is performed by using an example in which a ratio of a resolution of the projected image received by the television set is different from the ratio of the screen resolution of the television set. Certainly, when the ratio of the resolution of the projected image received by the television set is the same as the ratio of the screen resolution of the television set, the television set may not perform this step.

S1207: The television set performs black border cropping on the projected image.

Optionally, the projected image may be a projected image obtained after step S1206 is performed, that is, the projected image to which the black border is added. The projected image may alternatively be the projected image described in step S1204, that is, the projected image before the television set performs the black border adding operation.

In some embodiments, for example, in the foregoing full-screen display scenario and the foregoing caption and/or bullet comment scenario, the television set may not perform this step, but directly perform step S1208. In this embodiment, in the caption and/or bullet comment scenario, the caption and/or the bullet comment may be displayed on the black border included in the projected image received by the television set, or may not be displayed on the black border included in the projected image received by the television set.

In the caption and/or bullet comment scenario, according to the existing projection solution shown in FIG. 1, the television set also performs, according to the method described in step S105 in FIG. 1, the black border cropping operation on the projected image to which the black border is added. However, in the caption and/or bullet comment scenario, the content of the caption and/or the bullet comment included in the projected image may be displayed on the black border included in the projected image, and display areas of content of captions and/or bullet comments included in different frames of projected images on black borders may be different.

The video interface 1100 shown in (1) in FIG. 11 is used as an example. Positions of bullet comments are shown in (1) in FIG. 11. All three words in the bullet comment "Just show up" are displayed on the right black border included in the video interface 1100. Because all the right black border of the video interface 1100 obtained after black borders are added to the upper part and the lower part is occupied by the bullet comment "Just show up", if the television set crops the black borders on the left part and the right part of the video interface 1100 to which the black borders are added, the words in the bullet comment "Just show up" may be cropped. Therefore, the television set does not perform the black border cropping operation. Then, the television set may display the projected image 1110 shown in (2) in FIG. 11.

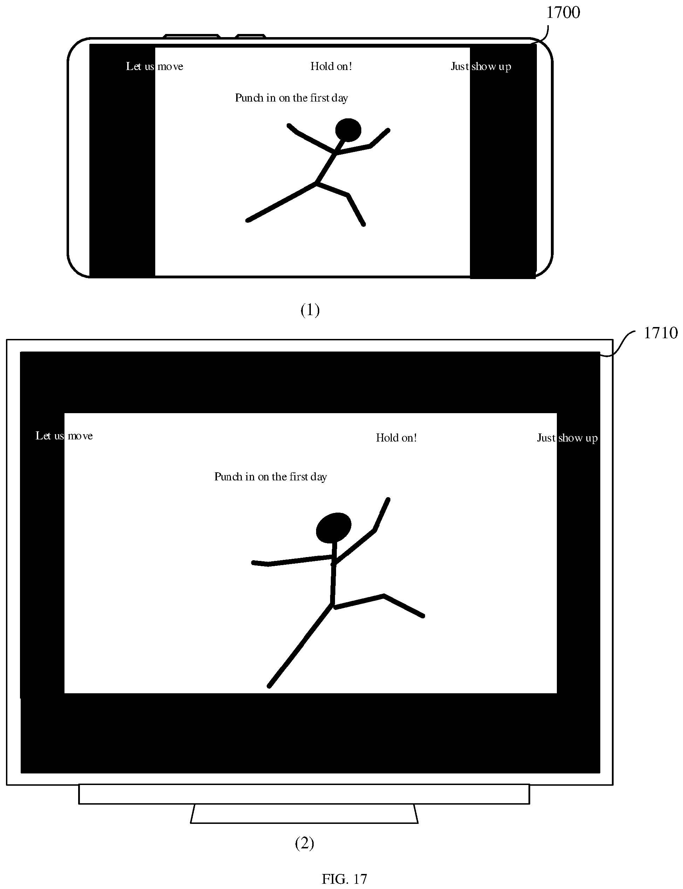

As the bullet comment slides from right to left, a next frame of video interface displayed by the mobile phone may be a video interface 1700 shown in (1) in FIG. 17. In this case, only two words "show up" in the bullet comment "Just show up" are displayed on a right black border included in the video interface 1700, and two words "let us " in the bullet comment "Let us move" are displayed on a left black border included in the video interface 1700. For the video interface 1700 obtained after the black borders are added to the upper part and the lower part, the left black border is partially occupied by the two words "Let us" in the bullet comment, and the right black border is partially occupied by the two words "show up" in the bullet comment. Therefore, the television set may crop the left black border and the right black border of the video interface 1700 to which the black borders are added, for example, crop a width of a word. Correspondingly, the television set also crops a part of upper and lower black borders, so that a ratio of a resolution of the projected image obtained after cropping is the same as the ratio of the screen resolution of the television set. Then, the television set may display a projected image 1710 shown in (2) in FIG. 17.

It can be learned that widths of the black borders included in the projected image shown in (2) in FIG. 11 are different from widths of the black borders included in the projected image shown in (2) in FIG. 17. In this way, because the caption and/or the bullet comment continuously slides, sizes of black borders of different projected images obtained after the television set performs cropping are different. Therefore, sizes of black borders included in the projected images finally displayed by the television set are also different. In this case, the projected image displayed by the television set may jitter and jump, which affects viewing experience of a user.

However, in embodiments of this application, in the caption and/or bullet comment scenario, the television set does not perform the black border cropping operation, and directly adds, based on the screen resolution of the mobile phone, the black border to the projected image including the caption and/or the bullet comment, so that the ratio of the resolution of the projected image is the same as the ratio of the screen resolution of the television set, and then the projected image to which the black border is added is directly displayed. This can avoid image jitter and jump caused by different black borders included in different frames of projected images.

Specifically, in a possible example, in the foregoing full-screen display scenario, the projected image received by the television set does not include the black border, and the television set adds a black border to the upper part and/or the lower part of the projected image, or the television set adds a black border to the left part and/or the right part of the projected image. For the projected image 1600 shown in (1) in FIG. 16, the television set adds the black borders to the left part and the right part of the projected image 1310 shown in (2) in FIG. 13. For the projected image 1620 shown in (3) in FIG. 16, the television set adds the black borders to the upper part and the lower part of the projected image 1410 shown in (2) in FIG. 14. In other words, when the black borders exist only on the upper part and/or the lower part of the projected image to which the black borders are added, or when the black borders exist only on the left part and/or the right part, the television set may not perform the black border cropping operation.

In another possible example, in the foregoing full-screen display scenario, the foregoing caption and/or bullet comment display scenario, and the like, the projected image received by the television set includes the black border, and the television set adds black borders to positions adjacent to a position of the black border in the projected image. For example, the black borders are included in the upper part and the lower part of the projected image 1030 shown in (4) in FIG. 13, and after the television set adds the black borders to the left part and the right part of the projected image 1030, the projected image 1610 shown in (2) in FIG. 16 is obtained; and the black borders are included in the left part and the right part of the projected image 1430 shown in (4) in FIG. 14, and after the television set adds the black borders to the upper part and the lower part of the projected image, the projected image 1630 shown in (4) in FIG. 16 is obtained. In this example, the television set may not perform this operation.

In some other embodiments, the television set may also perform this step in the foregoing full-screen display scenario, caption and/or bullet comment scenario, split-screen display scenario, multi-channel projection scenario, and the like. Specifically, in the foregoing full-screen display scenario, caption and/or bullet comment scenario, and the like, the television set may perform black border cropping on the projected image to which the black border is added. Optionally, in this example, the ratio of the resolution of the projected image obtained after cropping is the same as the ratio of the screen resolution of the television set.

In the caption and/or bullet comment scenario, if the caption and/or the bullet comment are/is not displayed on the black border included in the projected image received by the television set, similar to the full-screen display scenario, the television set may crop one or more black borders included in the projected image to which the black border is added. If the caption and/or the bullet comment are/is displayed on the black border included in the projected image received by the television set, the television set does not crop the black border used to display the caption and/or the bullet comment, and may crop a black border other than the black border.

In this implementation, in the caption and/or bullet comment scenario, if the black border included in the projected image received by the television set is used to display data (for example, the caption or the bullet comment), the television set does not perform the black border cropping operation on the black border used to display the data. This can also avoid problems of image jitter and jump caused by different black borders included in different frames of projected images.

In the foregoing split-screen display scenario, multi-channel projection scenario, and the like, if a black border exists in an original projected image (that is, on which the television set does not perform the black border adding operation), the television set may directly perform black border cropping on the original projected image. Optionally, in this example, the ratio of the resolution of the projected image obtained after cropping and the ratio of the screen resolution of the television set may be the same or may be different.

The split-screen display scenario shown in FIG. 9 is used as an example. The black borders are included in the upper part and the lower part of the image interface 900 shown in (1) in FIG. 9. After receiving the image interface 900, the television set may directly crop a part or all of the black borders included in the image interface 900. The multi-channel projection scenario shown in FIG. 10 is used as an example. The black borders are included in the upper part and the lower part of the image interface 1001 shown in (1) in FIG. 10. After receiving the image interface 1001, the television set may also directly crop a part or all of the black borders included in the image interface 1001.

In this way, in a scenario in which the television set displays the projected image in split screen, because the projected image received by the television set is an interface originally displayed by the mobile phone, the mobile phone does not perform the black border adding operation on the projected image. In this way, when the television set determines that the received projected image has the black border, the television set directly performs black border cropping on the received projected image, and only crops the original black border of the projected image. This can reduce a redundant operation that in a projection scenario in which the television set uses split-screen display, the mobile phone adds a black border to a projected image, and then the television set crops the added black border.

In this embodiment, in a possible example, in the full-screen display scenario, when at least three parts (for example, any three of the upper part, lower part, left part, and right part) of the projected image to which the black border is added include black borders, the television set may perform this step. Optionally, the television set may crop a part or all of a black border with a small width, so that effective content (namely, content other than the black border) of the projected image can occupy more display areas of a screen of the television set, for example, at most one of positions in any two adjacent black border display positions (for example, the upper part and the left part, the upper part and the right part, the lower part and the left part, the lower part and the right part) of the projected image obtained after cropping includes a black border. In this way, the projection effect is better and the projected image is clearer.

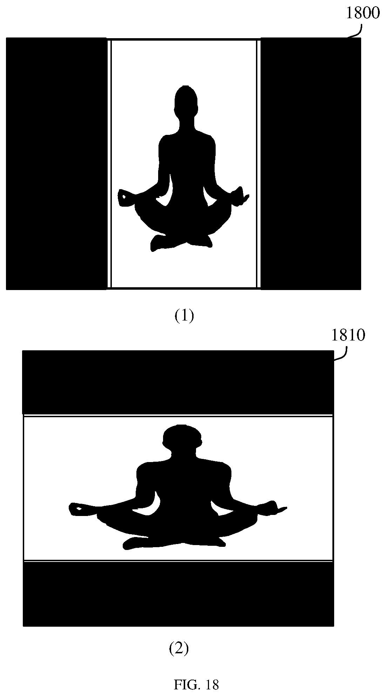

For example, for the projected image shown in (2) or (4) in FIG. 16, the television set may perform black border cropping on the projected image. The projected image shown in (2) in FIG. 16 is used as an example. The television set may crop the black borders on the upper part and the lower part of the projected image 1610. In this way, when the projected image 1610 is displayed on the television set, the upper part and the lower part of the projected image 1610 do not include the black borders. Then, correspondingly, a part of the black borders on the left part and the right part of the projected image are cropped, so that a ratio of a resolution of a projected image whose black borders are cropped is still the same as the ratio of the screen resolution of the television set. For example, the projected image obtained after cropping may be shown as a projected image 1800 shown in (1) in FIG. 18. The projected image shown in (4) in FIG. 16 is used as an example. The television set may crop the black borders on the left part and the right part of the projected image 1630. In this way, when the projected image 1630 is displayed on the television set, the left part and the right part of the projected image 1630 do not include the black borders. Then, correspondingly, a part of the black borders on the upper part and the lower part of the projected image are cropped, so that a ratio of a resolution of a projected image whose black borders are cropped is still the same as the ratio of the screen resolution of the television set. For example, the projected image obtained after cropping may be shown as a projected image 1810 shown in (2) in FIG. 18.

In (1) and (2) in FIG. 18, for example, the television set crops all of the black border with the small width (for example, the black borders on the upper part and the lower part of the projected image shown in (2) in FIG. 16, and the black borders on the left part and the right part of the projected image shown in (4) in FIG. 16).

In a possible example, in the caption and/or bullet comment scenario, if the projected image to which the black border is added includes, in addition to the black border used to display the caption and/or the bullet comment, a black border that is not used to display any data, the television set may perform this step. Optionally, the television set may crop a part or all of the black border that is not used to display any data, so that effective content of the projected image can occupy more display areas on the screen of the television set.

Optionally, in the full-screen display scenario, the caption and/or bullet comment scenario, or the like, the television set may first perform step S1206, and then perform step S1207. It may be understood that resolutions of projected images transmitted by a same mobile phone (namely, a same projection source end) to the television set are the same, and may be all the screen resolution of the mobile phone. In addition, the screen resolution of the television set is also fixed. In this way, when the television set adds black borders to the projected images transmitted by the same mobile phone, because these projected images are not cropped, and the resolutions of these projected images are the same, the television set may determine that sizes of the black borders to be added to these projected images are also the same. The television set does not need to separately calculate, based on the resolution of each projected image, a size of a black border that needs to be added, so that power consumption generated when the television set adds the black border to the projected image can be reduced, that is, power consumption generated when the television set adjusts a ratio of the resolution of each projected image to adapt to the ratio of the screen resolution of the television set can be reduced.

Certainly, the television set may alternatively first perform step S1207, and then perform step S1206. This is not limited in this application. Optionally, when the television set first performs step S1207, that is, when the television set first crops the black border (the black border is not added by the television set) included in the received projected image, a resolution and/or a ratio of a resolution of the projected image obtained after cropping may be the same or may be different. In this way, the television set first crops a black border of each projected image transmitted by the mobile phone. Because a resolution and/or a ratio of a resolution of the projected image obtained after cropping may be different, the television set may need to calculate, based on a resolution and/or a ratio of a resolution of each projected image obtained after cropping, a size of a corresponding black border that needs to be added.

Optionally, when the black border in embodiments of this application is replaced with another color, the technical solution provided in embodiments of this application is also used.

S1208: The television set displays the projected image.

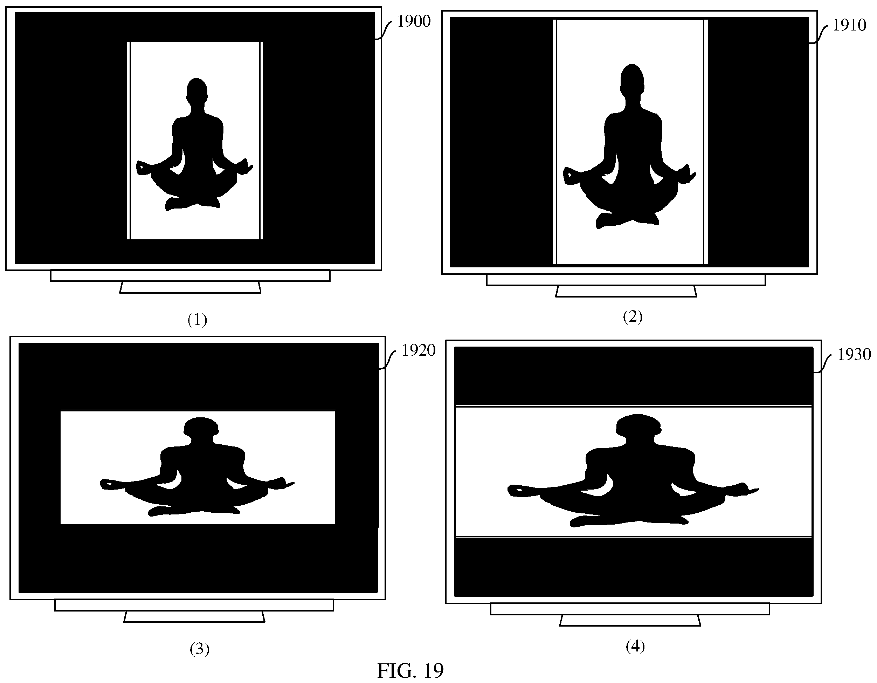

For example, in the full-screen display scenario, when the television set does not perform black border cropping on the projected image 1610 shown in (2) in FIG. 16, the projected image displayed by the television set is shown as a projected image 1900 shown in (1) in FIG. 19. Similarly, when the television set does not perform black border cropping on the projected image 1630 shown in (4) in FIG. 16, the projected image displayed by the television set is a projected image 1920 shown in (3) in FIG. 19.

When the television set crops all upper and lower black borders of the projected image 1610 shown in (2) in FIG. 16, the projected image displayed by the television set may be shown as a projected image 1910 shown in (2) in FIG. 19. Similarly, when the television set crops all left and right black borders of the projected image 1630 shown in (4) in FIG. 16, the projected image displayed by the television set may be shown as a projected image 1930 shown in (4) in FIG. 19.

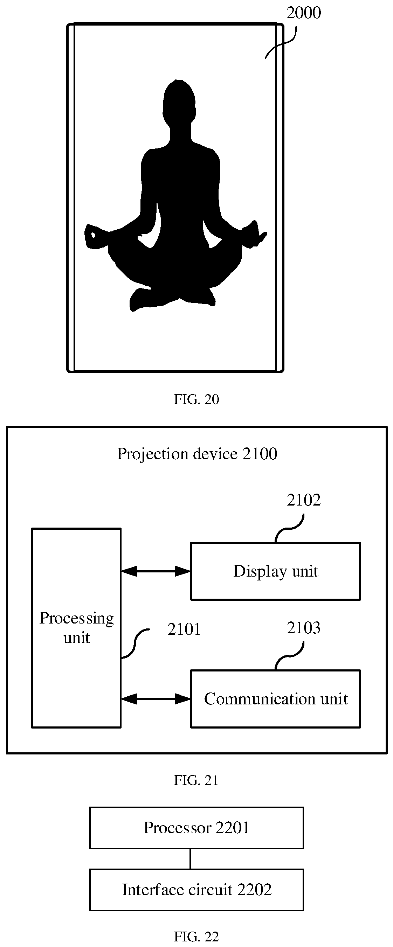

For example, in the split-screen display scenario, the projected image displayed by the television set may be shown in (3) in FIG.9. After the television set crops both upper and lower black borders of the image interface 900 shown in (1) in FIG. 9, the television set may obtain a projected image 2000 shown in FIG. 20. The television set may display the projected image 2000 and the video interface 910 shown in (2) in FIG. 9 in split screen.

In some examples, the television set may use a vertical split screen manner. In this case, the television set may adjust, based on a resolution of the projected image 2000 and a resolution of the video interface 910 shown in (2) in FIG. 9, a height of the projected image 2000 and a height of the video interface 910 shown in (2) in FIG. 9 to be the same. It may be understood that, because the television set may determine a resolution of the image interface 900 based on the screen resolution of the mobile phone, after the television set performs black border cropping on the image interface 900, the television set may also obtain, through calculation, the resolution of the projected image 2000 obtained after cropping. It may be further understood that the resolution of the video interface 910 shown in (2) in FIG. 9 is the screen resolution of the television set.

Optionally, after the television set adjusts the heights of the projected image 2000 and the video interface 910 shown in (2) in FIG. 9 to be the same, the television set may further add a black border, so that a ratio of a resolution of an interface obtained by combining the projected image 2000 and the video interface 910 is the same as a display ratio of the television set. Optionally, the television set may separately add black borders to the projected image 2000 and the video interface 910, or may add black borders to an entire interface obtained by combining the projected image 2000 and the video interface 910. This is not limited in this application.

Certainly, the television set may alternatively use another split screen manner, for example, uses a horizontal split screen manner to display the projected image and the image of the television set. This is not limited in this application.

Similarly, in the multi-channel projection scenario, the projected image displayed by the television set may be similar to the split screen interface 1020 shown in (3) in FIG. 10. For specific implementation in this scenario, refer to the related implementation in the split-screen display scenario. Details are not described herein again.

It may be understood that, in the split-screen display scenario and the multi-channel projection scenario, an effect of the projected image finally displayed by the television set is not limited in embodiments of this application.

For example, in the caption and/or bullet comment scenario, the projected image displayed by the television set may be shown in (2) in FIG. 11.

It may be understood that the interfaces provided in embodiments of this application are merely diagrams, and do not constitute a limitation on this application. During actual application, the interfaces may include more or less content, or more or fewer interfaces may be included.

The foregoing mainly describes the solutions provided in embodiments of this application from the perspective of the methods. It may be understood that, to implement the foregoing functions, the projection device includes a corresponding hardware structure and/or a corresponding software module for performing each function. With reference to the units and algorithm steps described in embodiments disclosed in this application, embodiments of this application can be implemented in a form of hardware or hardware and computer software. Whether a function is performed by hardware or hardware driven by a computer depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, the projection device may be divided into functional modules based on the foregoing method example. For example, each functional module may be obtained through division based on each corresponding function, or two or more functions may be integrated into one processing unit. The integrated unit may be implemented in a form of hardware, or may be implemented in a form of a software functional module. It should be noted that, in embodiments of this application, division into units is an example, and is merely a logical function division. During actual implementation, another division manner may be used.

FIG. 21 is a diagram of a structure of a projection device 2100 according to an embodiment of this application. The projection device 2100 may be configured to implement the methods recorded in the foregoing method embodiments. For example, the projection device 2100 may specifically include a processing unit 2101, a display unit 2102, and a communication unit 2103.

In a possible example, for example, the projection device 2100 is a first terminal (for example, a television set). The processing unit 2101 is configured to support the projection device 2100 in performing steps S1205 to S1207 in FIG. 12; and/or the processing unit 2101 is further configured to support the projection device 2100 in performing other steps performed by the first terminal in embodiments of this application.

The display unit 2102 is configured to support the projection device 2100 in performing step S1208 in FIG. 12; and/or the display unit 2102 is further configured to support the projection device 2100 in performing other steps performed by the first terminal in embodiments of this application.

The communication unit 2103 is configured to support the projection device 2100 in performing steps S1201 and S1202 in FIG. 12; and/or the communication unit 2103 is further configured to support the projection device 2100 in performing other steps performed by the first terminal in embodiments of this application.

In another possible example, for example, the projection device 2100 is a second terminal (for example, a mobile phone). The processing unit 2101 is configured to support the projection device 2100 in performing step S1203 in FIG. 12; and/or the processing unit 2101 is further configured to support the projection device 2100 in performing other steps performed by the second terminal in embodiments of this application.

The display unit 2102 is configured to support the projection device 2100 in performing a display operation; and/or the display unit 2102 is further configured to support the projection device 2100 in performing other steps performed by the second terminal in embodiments of this application.

The communication unit 2103 is configured to support the projection device 2100 in performing steps S1201 and S1202 in FIG. 12; and/or the communication unit 2103 is further configured to support the projection device 2100 in performing other steps performed by the second terminal in embodiments of this application.

Optionally, the projection device 2100 shown in FIG. 21 may further include a storage unit (not shown in FIG. 21), and the storage unit stores a program or instructions. When the processing unit 2101 executes the program or the instructions, the projection device 2100 shown in FIG. 21 may perform the method shown in FIG. 12.

For technical effects of the projection device 2100 shown in FIG. 21, refer to the technical effects of the method shown in FIG. 12. Details are not described herein again. The processing unit 2101 in the projection device 2100 shown in FIG. 21 may be implemented by a processor or a processor-related circuit component, and may be a processor or a processing module. The communication unit 2103 may be implemented by a transceiver or a transceiver-related circuit component, and may be a transceiver or a transceiver module. The display unit 2102 may be implemented by a display-related component.

An embodiment of this application further provides a chip system. As shown in FIG. 22, the chip system includes at least one processor 2201 and at least one interface circuit 2202. The processor 2201 and the interface circuit 2202 may be interconnected through a line. For example, the interface circuit 2202 may be configured to receive a signal from another apparatus. For another example, the interface circuit 2202 may be configured to send a signal to another apparatus (for example, the processor 2201). For example, the interface circuit 2202 may read instructions stored in a memory, and send the instructions to the processor 2201. When the instructions are executed by the processor 2201, the projection device may be enabled to perform the steps performed by the first terminal or the second terminal in the foregoing embodiments. Certainly, the chip system may further include another discrete component. This is not specifically limited in this embodiment of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer storage medium. The computer storage medium stores computer instructions. When the computer instructions are run on a projection device, the projection device is enabled to perform the methods in the foregoing method embodiments.

An embodiment of this application provides a computer program product. The computer program product includes computer programs or instructions. When the computer programs or the instructions are run on a computer, the computer is enabled to perform the methods in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the methods in the foregoing method embodiments.

An embodiment of this application further provides a projection system, including a first terminal and a second terminal. The first terminal is configured to perform the method performed by the first terminal in the foregoing method embodiment, and the second terminal is configured to perform the method performed by the second terminal in the foregoing method embodiment.

The projection device, the computer storage medium, the projection system, the computer program product, or the chip provided in embodiments is configured to perform the corresponding method provided above. Therefore, for beneficial effects that can be achieved by the projection device, the computer storage medium, the projection system, the computer program product, or the chip, refer to beneficial effects of the corresponding method provided above. Details are not described herein again.

Based on the descriptions about the foregoing implementations, a person skilled in the art may understand that, for a purpose of convenient and brief description, division into the foregoing functional modules is used as an example for illustration. During actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. The embodiments may be combined or referenced with each other without conflict. The described apparatus embodiments are merely examples. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A projection method, wherein the method comprises:
receiving, by a first terminal, a first image sent after a second terminal starts projection, wherein the first image is an image displayed on the second terminal;
obtaining, by the first terminal, a screen resolution of the second terminal; and
displaying, by the first terminal, a second image based on the first image and the screen resolution of the second terminal, wherein the second image is a projected image of the first image.

2. The method according to claim 1, wherein a ratio of a resolution of the first image is different from a ratio of a screen resolution of the first terminal; and
the displaying, by the first terminal, a second image based on the first image and the screen resolution of the second terminal comprises:
determining, by the first terminal, the resolution of the first image based on the screen resolution of the second terminal;
adjusting, by the first terminal, the ratio of the resolution of the first image, wherein a ratio of a resolution of the first image obtained after adjustment is the same as the ratio of the screen resolution of the first terminal; and
displaying, by the first terminal, the second image based on the first image obtained after adjustment.

3. The method according to claim 2, wherein the adjusting, by the first terminal, the ratio of the resolution of the first image comprises:
filling, by the first terminal, the first image with a black border, wherein a ratio of a resolution of a first image that is filled with the black border is the same as the ratio of the screen resolution of the first terminal.

4. The method according to claim 3, wherein before the displaying, by the first terminal, a second image based on the first image and the screen resolution of the second terminal, the method further comprises:
performing, by the first terminal, black border detection on the first image based on the resolution of the first image.

5. The method according to claim 4, wherein a result of the black border detection is that the first image comprises a black border; and the method further comprises:
when the black border comprised in the first image is used to display data, skipping, by the first terminal, cropping the black border that is comprised in the first image and that is used to display the data.

6. The method according to claim 4, wherein a result of the black border detection is that the first image comprises a black border; and the method further comprises:
when the black border comprised in the first image is not used to display data, cropping, by the first terminal, the black border that is comprised in the bordered first image, wherein a ratio of a resolution of the cropped first image is the same as the ratio of the screen resolution of the first terminal.

7. The method according to claim 5 or 6, wherein the data comprises a caption and/or a bullet comment.

8. The method according to claim 1, wherein the first terminal displays the second image in split screen; and
the displaying, by the first terminal, a second image based on the first image and the screen resolution of the second terminal comprises:
determining, by the first terminal, a resolution of the first image based on the screen resolution of the second terminal;
performing, by the first terminal, black border detection on the first image based on the resolution of the first image; and
determining, by the first terminal based on a result of the black border detection, that the first image comprises a black border, cropping, by the first terminal, the black border comprised in the first image, and displaying, by the first terminal, the second image based on a first image obtained after cropping.

9. The method according to claim 1, wherein the first terminal displays the second image in split screen; and
the displaying, by the first terminal, a second image based on the first image and the screen resolution of the second terminal comprises:
determining, by the first terminal, a resolution of the first image based on the screen resolution of the second terminal;
performing, by the first terminal, black border detection on the first image based on the resolution of the first image; and
determining, by the first terminal based on a result of the black border detection, that the first image does not comprise a black border, and displaying, by the first terminal, the second image based on the first image.

10. The method according to claim 8 or 9, wherein the method further comprises:
further displaying, by the first terminal, a third image, wherein the third image and the second image are displayed in split screen; and
the third image is a projected image of an image displayed on a third terminal; or the third image is an image originally output on the first terminal; or the third image is a projected image of an image displayed on the second terminal.

11. A projection method, wherein the method comprises:
displaying, by a second terminal, a first image; and
after the second terminal starts projection, sending, by the second terminal, the first image and a screen resolution of the second terminal to a first terminal, wherein the first image and the screen resolution of the second terminal are used by the first terminal to display a second image, and the second image is a projected image of the first image.

12. A terminal device, comprising a processor, a memory, a communication interface, and a display, wherein the memory, the communication interface, and the display are coupled to the processor, the communication interface is configured to communicate with another device, the memory is configured to store computer program code, the computer program code comprises computer instructions, and the processor reads the computer instructions from the memory, so that the terminal device performs the method according to any one of claims 1 to 10, or the terminal device performs the method according to claim 11.

13. A computer-readable storage medium, wherein the computer-readable storage medium comprises a computer program or instructions, and when the computer program or the instructions is/are run on a terminal device, the terminal device is enabled to perform the method according to any one of claims 1 to 10, or the terminal device is enabled to perform the method according to claim 11.

14. A computer program product, wherein when the computer program product is run on a computer, the computer is enabled to perform the method according to any one of claims 1 to 10, or the computer is enabled to perform the method according to claim 11.

15. A projection system, comprising a first terminal and a second terminal, wherein the first terminal is configured to perform the method according to any one of claims 1 to 10, and the second terminal is configured to perform the method according to claim 11.
